# EUROPÄISCHE PATENTSCHRIFT

(11) **EP 2 564 105 B1**
(45) Veröffentlichungstag und Bekanntmachung des Hinweises auf die Patenterteilung: **26.02.2014**
(21) Anmeldenummer: 10771645.8
(22) Anmeldetag: 04.10.2010
(51) Int. Cl.: F16L 37/35

(54) **HYDRAULIKKUPPLUNGSMUFFE**
HYDRAULIC COUPLING BUSH
MANCHON D'ACCOUPLEMENT HYDRAULIQUE

(30) Priorität: 30.04.2010 DE 102010019094
(43) Veröffentlichungstag der Anmeldung: 06.03.2013
(60) Teilanmeldung: 13004949.7
(73) Patentinhaber: Rheinisch-Westfälisch-Technische Hochschule Aachen, 52062 Aachen (DE)
(72) Erfinder: PRUST, David, Josef, Ludwig, 52062 Aachen (DE); LÖHR, Christian, 52064 Aachen (DE); INDERELST, Martin, 52062 Aachen (DE)
(74) Vertreter: Cohausz Hannig Borkowski Wißgott
(86) Internationale Anmeldenummer: PCT/EP2010/006033
(87) Internationale Veröffentlichungsnummer: WO 2011/134484

(56) Entgegenhaltungen:
- EP-A1- 0 542 342
- WO-A1-97/11302
- DE-C1- 19 717 820
- GB-A- 2 186 044
- US-A- 5 123 446
- US-B1- 6 776 187
- US-B1- 6 830 059

## Beschreibung

Die Erfindung betrifft eine Hydraulikkupplungsmuffe mit einem Muffengehäuse, insbesondere einem hülsenförmigen Muffengehäuse, in welchem achsparallel, insbesondere koaxial ein Muffenstößel, eine diesen Muffenstößel achsparallel, insbesondere koaxial umgebende, axial bewegliche Druckhülse und eine die Druckhülse achsparallel, insbesondere koaxial umgebende axial bewegliche Haltehülse angeordnet ist, deren äußere Mantelfläche im Muffengehäuse angeordnete Sicherungselemente in radialer Richtung unterstützen oder frei geben und deren insbesondere ringförmige Stirnfläche im ungekuppelten Zustand mit den Stirnflächen des Muffenstößels und des Muffengehäuses zumindest im Wesentlichen in einer Ebene liegt und die Druckhülse von innen mit einem durch die Muffe zu fördernden Hydraulikfluid zumindest im Wesentlichen axial kraftfrei beaufschlagt ist.

Hydraulikkupplungsmuffen dieser Bauart sind im Stand der Technik, beispielsweise aus US 5123446 bekannt und kommen zum Einsatz in Verbindung mit zugehörigen Hydraulikkupplungssteckern, so dass Stecker und Muffe miteinander verkuppelt werden können, um ein Hydraulikfluid durch diese hindurchzuleiten.

Kupplungen dieser Art werden z.B. verwendet, um einen vorhandenen Hydraulikkreis auf vergleichsweise leichte und schnelle Art mit verschiedenen Arbeitsgeräten zu verbinden oder von diesen zu trennen. Beispielsweise werden sie im Land- und Baumaschinenbau verwendet, um Hydrauliköl von einer Hydraulikpumpe zu einem Arbeitsgerät und zurück zu einem Auffangtank zu führen.

Die bislang bekannte Konstruktion derartiger Hydraulikkupplungsmuffen ist dabei derart, dass der Muffenstößel in axialer Richtung fest koaxial in dem Muffengehäuse angeordnet ist und eine vordere, etwa kreisförmige Stirnfläche aufweist.

Bei einer im Stand der Technik bekannten Ausführung bildet der der Stirnfläche abgewandte Bereich des Muffenstößels einen Dichtsitz, der mit einem vorderen freien Ende der benannten Druckhülse zusammenwirken kann, um einen Fluiddurchgang durch das Innere der Druckhülse zu verschließen, wenn die axial bewegliche Druckhülse in axialer Richtung von der der Stirnfläche abgewandten Seite und somit aus dem Inneren des Muffengehäuses in Richtung zu einem Hydraulikkupplungsstecker bewegt ist und am Muffenstößel anliegt.

Der vordere, mit einem Muffenstößel zusammenwirkende Bereich der Druckhülse ist bei dieser bekannten Ausführung von innen mit dem Arbeitshydraulikfluid beaufschlagt, so dass dieses Fluid in einen angekuppelten Hydraulikkupplungsstecker nur dann überfließen kann, wenn die Druckhülse in axialer Richtung vom Muffenstößel bzw. dessen Dichtsitz wegbewegt ist. Hierfür ist bei den bekannten Hydraulikkupplungsmuffen die Druckhülse innerhalb des Muffengehäuses axial verschieblich angeordnet, so dass wahlweise der Fluiddurchgang geöffnet und geschlossen werden kann. Bei dieser Ausführung stellt die Druckhülse einen Kanal für das zu fördernde Hydraulikfluid dar, der durch eine relative Bewegung zwischen Druckhülse und Muffenstößel verschließbar ist. In diesem Kanal ist der Muffenstößel angeordnet, der vom zu fördernden Hydraulikfluid umgeben ist.

Wie nachfolgend zur Erfindung beschrieben wird, kann ein Fluiddurchgang auch auf andere Weise realisiert werden, wobei es aber auch hier wesentlich ist, dass der Fluiddurchgang durch eine relative Bewegung in axialer Richtung zwischen Druckhülse und Muffenstößel geöffnet oder geschlossen werden kann.

Koaxial um die Druckhülse und den im Stand der Technik ortsfesten Muffenstößel ist weiterhin eine Haltehülse koaxial angeordnet, die eine ringförmige, den Muffenstößel umgebende Stirnfläche aufweist und im ungekuppelten Zustand mit der Stirnfläche des Muffenstößels und der Stirnfläche des äußeren Muffengehäuses in einer Ebene liegt, so dass eine ungekuppelte Hydraulikkupplungsmuffe eine im Wesentlichen glatte ebene vordere stirnseitige Fläche aufweist.

Die Haltehülse ist hierbei insbesondere gegen eine vorspannende Federkraft in axialer Richtung in das Muffengehäuse hinein verschieblich und unterstützt im ungekuppelten Zustand sowie auf einem Teilbereich ihres Verschiebungsweges Sicherungselemente, die radial beweglich in der Wandung des Muffengehäuses angeordnet sind, insbesondere im Bereich des vorderen, einem Hydraulikkupplungsstecker zugewandten Ende, wobei solche Sicherungselemente z.B. aus Kugeln ausgebildet sind.

Unter einer Verschiebung in das Muffengehäuse hinein wird an dieser Stelle und auch der späteren Beschreibung der Erfindung verstanden, dass die Bewegung des jeweils benannten Elementes in der Richtung zur Fluidzuführung der Hydraulikkupplungsmuffe erfolgt, insbesondere also von einem zu kuppelnden Hydraulikkupplungsstecker weg.

Durch das Einstecken eines Hydraulikkupplungssteckers in die Muffe kommen dabei der im Stand der Technik ortsfeste Muffenstößel und ein korrespondierender Steckerstößel des Hydraulikkupplungssteckers aneinander zur Anlage, wobei durch die axiale Bewegung des Hydraulikkupplungssteckers in das Muffengehäuse ein äußerer Steckergehäusebereich unter Verschiebung der Haltehülse weiter in das Muffengehäuse eingeschoben wird und sich so, bezogen auf den Stecker, dessen Steckerstößel relativ zum Steckergehäuse in dessen Inneres bewegt und hierdurch einen Fluiddurchgang im Hydraulikkupplungsstecker frei gibt.

Durch ein entsprechend weites Einschieben des Steckergehäuses in das Muffengehäuse wird die Haltehülse soweit axial in das Innere des Muffengehäuses verlagert, dass deren Mantelfläche die Sicherungselemente nicht mehr unterstützen und diese sodann bei einer Weiterbewegung auf der äußeren Oberfläche des Steckergehäuses anliegen, bis dass das Steckergehäuse bis zu einer Ringnut auf dieser Oberfläche in das Muffengehäuse eingeschoben ist, so dass die Sicherungselemente, beispielsweise Kugeln, in diese Ringnut eingreifen, z.B. einfallen können. In einem solchen Zustand ist der Stecker in der Muffe axial gesichert, wobei das versehentliche Lösen des Steckers aus der Muffe dadurch verhindert werden kann, dass durch eine, z.B. federvorgespannte Schiebehülse außen auf dem Muffengehäuse die Sicherungselemente in der Eingriffslage mit der Nut des Steckergehäuses gehalten werden.

Beim Vorgang des Einschiebens des Steckergehäuses in das Muffengehäuse wird ab einer bestimmten Verschiebungsweite der Haltehülse, die um die Druckhülse angeordnet ist, diese Haltehülse an einen Anschlag der Druckhülse bewegt, so dass für den weiteren Verschiebeweg beim Einschieben des Steckers in die Muffe die axial bewegte Haltehülse gleichzeitig auch die Druckhülse mitbewegt, so dass sich deren freies vorderes Ende vom Dichtbereich des Muffenstößels abhebt und so den Fluiddurchgang freigibt.

Zur Erzielung der hier benannten axialen Verschiebemöglichkeiten sind die einzelnen verschiebbaren Bauelemente im Stand der Technik, insbesondere auch bei der später zu beschreibenden Erfindung zueinander bevorzugt koaxial angeordnet und jeweils untereinander bzw. aneinander gelagert. Auch eine achsparallele nicht-koaxiale Anordnung der Bauelemente zueinander ist bei der Erfindung möglich.

Beispielsweise ergibt sich die Verschieblichkeit der Haltehülse dadurch, dass deren Außenumfang an den Innenumfang des Muffengehäuses angepasst ist, so dass deren Flächen aufeinander gleiten können. In gleicher Weise kann die Druckhülse mit einem äußeren Anlagebereich an der Innenwandung der Haltehülse und/oder an einem weiteren Innenbereich des Muffengehäuses axial verschieblich gelagert sein.

Dabei ist die Verschieblichkeit derart ausgeführt, dass das durch einen Hydraulikanschluss in die Muffe zugeführte Hydraulikfluid bei der bekannten Ausführung in das Innere der Druckhülse eintreten kann und erst nach Abheben der Druckhülse vom Dichtsitz des Muffenstößels in einen Stecker übertreten kann.

Bei der im Stand der Technik bekannten Hydraulikkupplungsmuffe wird es als Nachteil angesehen, dass aufgrund der gegebenen Verschiebewege die Druckhülse bereits verschoben und somit der Fluiddurchgang zum Stecker geöffnet wird, auch wenn der Stecker noch nicht sicher durch Verriegelung mit den Sicherungselementen im Muffengehäuse an diesem befestigt ist. Es kann daher bereits Hydraulikflüssigkeit aus der Muffe austreten und beispielsweise Umweltschäden hervorrufen.

Es wird weiterhin als nachteilig angesehen, dass einerseits Stecker einer im Stand der Technik bekannten Bauart mit einem axial beweglichen Steckerstößel gegenüber einem äußeren Steckergehäuse beim Kupplungsvorgang gegen den im Steckerinneren wirkenden Fluiddruck bewegt werden müssen und andererseits ab dem zuvor genannten Verschiebeweg der Haltehülse, nach dem diese mit der Druckhülse in Anschlag kommt, durch die Steckerbewegung auch die Druckhülse gegen einen im Inneren der Muffe vorherrschenden Druck des zu fördernden Hydraulikfluids bewegt werden muss. Bei dem im Stand der Technik bekannten Bauformen der Hydraulikkupplungsmuffe wirkt der Druck des zu fördernden Hydraulikfluids auf die fluidanschlußseitige ringförmige Stirnfläche der Druckhülse und bewirkt so zusammen mit evtl. weiteten Flächen der Druckhülse große axial in Richtung zur Stirnfläche des Muffenstößels bzw. zum Stecker gerichtete Kräfte die der Verschiebung der Druckhülse durch den Stecker entgegen wirken.

Dies ist insoweit als nachteilig anzusehen, als dass es für bedienende Personen unmöglich ist, die hierfür benötigten Kräfte bei unter Druck stehenden Leitungen per Hand aufzubringen. Es besteht daher im Regelfall die Notwendigkeit, zunächst eine Druckentlastung beim hydraulischen System vorzunehmen, um die Verschieblichkeit des Steckerstößels in das Steckergehäuse und der Druckhülse in das Muffengehäuse beim Kupplungsvorgang zu ermöglichen.

Es ist daher die Aufgabe der Erfindung, eine Hydraulikkupplungsmuffe derart weiter zu bilden, dass eine konstruktiv einfach auszuführende druckentlastete Hydraulikkupplungsmuffe bereit gestellt wird, sodass zumindest bei der Muffe keine entgegenwirkenden Kräfte beim Kupplungsvorgang überwunden werden müssen, insbesondere wobei entgegenwirkenden Kräfte im Wesentlichen vollständig entfallen, wenn solche erfindungsgemäßen Muffen in Verbindung mit druckentlasteten Hydraulikkupplungssteckern eingesetzt werden.

Dabei soll unter im Wesentlichen vollständig entfallenden Kräften verstanden werden, dass allenfalls solche verbleibenden Kräfte überwunden werden müssen, die von einer bedienenden Person einfach per Hand aufgebracht werden können, somit insbesondere Kräfte kleiner als 200 bevorzugt kleiner 100 Newton.

Eine alternative oder kumulative Aufgabe ist es auch, dass ein Leckagerisiko vermieden wird, insbesondere dass zunächst vor dem Öffnen des Fluiddurchgangs in der Hydraulikkupplungsmuffe ein eingeführter Stecker sicher verriegelt ist.

Alternativ, aber auch in Kumulation zur vorgenannten Aufgabe ist es die Aufgabe der Erfindung, mit einer weiter gebildeten erfindungsgemäßen Muffe Hydraulikkupplungsstecker ankuppeln zu können, selbst wenn diese unter Druck stehen und nicht zuvor entlastet wurden. So soll aufgabengemäß erzielt werden, dass mit einer erfindungsgemäßen Hydraulikkupplungsmuffe eine bedienende Person lediglich mit der zur Verfügung stehenden Handkraft einen Kupplungsvorgang zwischen Stecker und Muffe erzielen kann.

Gemäß einem Aspekt der Erfindung wird die eingangs genannte Aufgabe dadurch gelöst, dass der Muffenstößel einen inneren durch das zu fördernde Hydraulikfluid beaufschlagten Kanal aufweist, der sich von einem Hydraulikfluidanschluß in Richtung zur Stirnfläche des Muffenstößels erstreckt und axial vor dessen Stirnfläche in wenigstens eine Öffnung auf der Außenfläche des Muffenstößels mündet, durch welche die Druckhülse von innen druckbeaufschlagt ist, wobei axial vor und hinter der wenigstens einen Öffnung die Druckhülse und der Muffenstößel gedichtet und verschieblich aneinander anliegen..

So ist es der wesentliche Kerngedanke der Erfindung, dass durch die Druckbeaufschlagung vom zu fördernden Hydraulikfluid keine oder zumindest keine wesentlichen axialen und beim Kuppeln zu überwindenden Kräfte erzeugt werden, die auf die Druckhülse wirken, insbesondere wenn die Muffe vor dem Verkuppeln geschlossen ist.

Unter keinen wesentlichen Kräften wird wiederum verstanden, dass allenfalls noch solche axialen Kräfte verbleiben, die problemlos per Hand aufgebracht werden können, insbesondere somit Kräfte kleiner 200 bevorzugt kleiner 100 Newton. In bevorzugter Ausführung ist hingegen die Konstruktion so gewählt, dass durch die innere Fluiddruckbeaufschlagung keine effektiven axialen Kräfte entstehen, die dem Kupplungsvorgang entgegenstehen.

Gegenüber dem Stand der Technik, bei dem Muffen mit mehreren hundert bar Innendruck unmöglich per Hand gekuppelt werden konnten, ergibt sich somit bei der Erfindung die Möglichkeit der Handverkupplung ohne eine vorherige Druckentlastung vornehmen zu müssen.

In einer Ausführung kann es vorgesehen sein, dass die Druckhülse mittels einer Druckfeder in Richtung zur Stirnfläche des Muffenstößels, also in Richtung zu einem zu kuppelnden Stecker kraftbeaufschlagt ist. So wird sichergestellt, dass eine effektive Schließkraft auf die Druckhülse wirkt, die den Fluiddurchgang zwischen Druckhülse und Muffenstößel oder ein zu leichtes Öffnen verhindert, selbst wenn durch die Fluiddruckbeaufschlagung keinerlei axial wirkende Effektivkraft mehr vorhanden ist.

Die axialkraftfreie Druckbeaufschlagung der Druckhülse wird erfindungsgemäß nun dadurch erzielt, dass der Muffenstößel einen inneren durch das zu fördernde Hydraulikfluid beaufschlagten Kanal aufweist, der sich von einem Hydraulikfluidanschluß in Richtung zur Stirnfläche des Muffenstößels erstreckt und axial vor dessen Stirnfläche in wenigstens eine Öffnung auf der Außenfläche des Muffenstößels mündet, durch welche die Druckhülse von innen druckbeaufschlagt ist, wobei axial vor und hinter der wenigstens einen Öffnung die Druckhülse und der Muffenstößel gedichtet und verschieblich aneinander anliegen. Insbesondere wird so ein zwischen Muffenstößel und Druckhülse eingeschlossener Raum geschaffen, der durch das Hydraulikfluid beaufschlagt ist.

Diese erfindungsgemäße Ausführung bewirkt in vorteilhafter Weise, dass nun keine Druckbeaufschlagung mehr durch das Hydraulikfluid auf die anschlussseitige ringförmige Stirnfläche der Druckhülse möglich ist, wodurch eine sehr große Kraftkomponente vermieden wird, die im Stand der Technik vorhanden ist, da dort eine Dichtung zwischen Druckhülse und Muffenstößel nur steckerseitig im Bereich der Stirnfläche des Muffenstößel vorgesehen war.

In einer möglichen Ausführung dieser Art, die Druckhülse an dem Muffenstößel gedichtet und verschieblich zu lagern kann es vorgesehen sein, dass axial vor und hinter der wenigstens einen Öffnung die Druckhülse und der Muffenstößel auf unterschiedlichen Dichtungsdurchmessern gedichtet aneinander anliegen, wobei an der Druckhülse durch zu förderndes Hydraulikfluid beaufschlagte Flächen vorgesehen sind, von denen wenigstens eine Fläche axial auf die Druckhülse in Richtung Hydraulikfluidanschluß wirkende Kräfte erzeugt und von denen wenigstens eine Fläche axial auf die Druckhülse in Richtung Muffenstößelstirnfläche wirkende Kräfte erzeugt, wobei sich die Kräfte in der Summe vektoriell zu Null addieren oder zu einer verbleibenden in Richtung auf die Stirnfläche gerichteten Kraft addieren, die durch Handkraft bei einem Kupplungsvorgang überwindbar ist.

Die Ausführung der Dichtung auf verschiedenen Dichtungsdurchmessern hat den Vorteil, dass Muffenstößel und/oder Druckhülse über ihr axiale Länge hinweg verschiedene Innen- und/oder Außendurchmesser aufweisen können, was die Konstruktion vereinfacht und einen im Innen- und/oder Außendurchmesser sich verjüngenden Verlauf, insbesondere stufig verjüngenden Verlauf der Druckhülse und/oder des Muffenstößels gestattet, insbesondere wodurch z.B. auf einfache Weise Anschläge erzeugt werden können, die beim Verschieben zur Wirkung kommen. Weiterhin können die konstruktiven Möglichkeiten für eine strömungsdynamisch günstigere Gestaltung deutlich verbessert werden. Ebenfalls steigt die effektive durchströmte Querschnittsfläche, die zu geringen Strömungsverlusten führt, sobald man die Werkstofffestigkeiten bei höheren Betriebsdrücken berücksichtigen muss.

Flächen, die durch die Druckbeaufschlagung mit Hydraulikfluid Kräfte erzeugen, die in axialer Richtung wirken, können sodann z.B. solche Ringflächen sein, die an inneren und/oder äußeren Durchmesserstufen der Druckhülse vorliegen.

Dabei werden im Wesentlichen solche Flächenbereiche, insbesondere Ringflächen, axiale in Richtung zur Stirnfläche des Muffenstößels auf die Druckhülse wirkende Kräfte erzeugen, die an Durchmesserstufen gebildet sind, an denen der Innendurchmesser der Druckhülse von der Fluidanschlussseite in Richtung zur Stirnfläche des Muffenstößel verjüngend ausgebildet ist. Solche Kräfte halten somit den Fluiddurchgang geschlossen und wirken der Verkupplung entgegen, da sie die Druckhülse zum Stecker drücken.

Es kann somit in einer bevorzugten Weiterbildung vorgesehen sein, dass wenigstens eine durch zu förderndes Hydraulikfluid beaufschlagte Fläche der Druckhülse, die eine axial zum Hydraulikfluidanschluß gerichtete Kraft erzeugt, an der äußeren Wandung der Druckhülse vorgesehen ist, die durch einen Verbindungskanal in der Wandung der Druckhülse von deren Inneren mit Hydraulikfluid beaufschlagt ist. Eine solche Fläche kann ebenfalls durch eine Durchmesserstufe erzeugt sein, an welcher nun hingegen der Außendurchmesser der Druckhülse von der Fluidanschlussseite in Richtung zur Stirnfläche des Muffenstößels verjüngend ausgebildet ist. Eine solche Fläche erzeugt eine axiale Kraft, welche die Druckhülse von dem Dichtsitz des Muffenstößels herunterzieht.

Die Flächengrößen aller solcher Flächen und somit bevorzugt aller inneren und äußeren Durchmesserstufen der Druckhülse sind bevorzugt so dimensioniert, dass sich die axialen Kräfte in der Summe zumindest im Wesentlichen oder sogar vollständig kompensieren.

Bevorzugt kann es so sein, dass der Verbindungskanal einen äußeren an die Druckhülse außen angrenzenden Ringraum mit dem Inneren der Druckhülse und/oder dem Kanal des Muffenstößels verbindet, wobei der äußere Ringraum angeordnet ist zwischen Druckhülse und Muffengehäuse oder zwischen Druckhülse und einem im Muffengehäuse angeordneten Einsatz.

Besonders bevorzugt kann dabei der äußere Ringraum so bemessen sein, dass er ein Reservoir bildet, welches aus dem Inneren der Druckhülse bei einer Verschiebung verlagertes Hydraulikfluid aufnimmt, insbesondere wobei die beim Verschieben erzeugte Volumenvergrößerung des Ringraumes der Volumenverkleinerung des inneren Volumens der Druckhülse entspricht. So wird bewirkt, dass zum einen alle statischen durch das Hydraulikfluid erzeugten axialen Kräfte kompensiert sind und zum anderen durch die Verschiebung der Druckhülse beim Kupplungsvorgang in das Muffengehäuse hinein kein Hydraulikfluid aus der Muffe herausgedrückt werden muss, da deren inneres Volumen konstant bleibt und lediglich eine Verschiebung des Hydraulikfluids innerhalb der Muffe erfolgt.

Die axiale Kraftfreiheit kann auch mit einer anderen Ausführung erreicht werden, bei der axial vor und hinter der wenigstens einen Öffnung die Druckhülse und der Muffenstößel auf gleichen Dichtungsdurchmessern gedichtet aneinander anliegen. Hierdurch wird automatisch sicher gestellt, dass die axialen Kräfte in beide axialen Richtungen gleich groß sind und sich somit immer exakt kompensieren.

Es kann in einer solchen Ausführung weiterhin vorgesehen sein, dass an einem zur Stirnfläche nahen Bereich der Muffenstößel außen und die Druckhülse innen zylindrisch ausgebildet sind, insbesondere mit im Wesentlichen demselben Durchmesser, so dass die wenigstens eine Öffnung der Innenwandung der Druckhülse ohne Abstand oder zumindest ohne wesentlichen Abstand radial gegenüberliegt.

Ohne wesentlichen Abstand soll hier bedeuten, dass ein minimaler technisch notwendiger Abstand vorgesehen sein kann, um die Verschieblichkeit der Druckhülse auf dem Muffenstößel zu gewährleisten.

Die eingangs genannte Aufgabe wird gemäß einem anderen Aspekt der Erfindung mit einer Hydraulikkupplungsmuffe der eingangs beschriebenen Art auch dadurch gelöst, dass der Muffenstößel an einem achsparallel, bevorzugt koaxial im Muffengehäuse angeordneten Innenkolben befestigt ist und zusammen mit diesem axial beweglich ist, wobei ausgehend vom ungekuppelten Zustand die Anordnung aus Muffenstößel, Innenkolben und Druckhülse in seiner Gesamtheit, insbesondere in einer bestimmten Ausführung auch zusammen mit der Haltehülse axial in das Innere des Muffengehäuses verschiebbar ist bis zu einer Endposition, in welcher ein Hydraulikkupplungsstecker mit der Hydraulikkupplungsmuffe über die Sicherungselemente verriegelbar ist und wobei sodann ausgehend von dieser Endposition zunächst die Gesamtheit aus Muffenstößel, Innenkolben und Druckhülse zurückschiebbar ist in die Richtung zum Stecker bis zu einer Anschlagposition, bei der die Druckhülse an einem Anschlag, z.B. einem Anschlag an der Haltehülse oder an dem Muffengehäuse axial festgelegt ist und ausgehend von dieser Anschlagposition der Muffenstößel und Innenkolben alleinig weiter zurückschiebbar sind in Richtung des Steckers, bis dass der Fluidurchgang durch die Muffe geöffnet ist, z.B. dadurch dass die Druckhülse durch den Muffenstößel geöffnet ist. Hierbei kann es vorgesehen sein, dass das Zurückschieben soweit erfolgt, bis dass die Stirnfläche des Muffenstößels, der zusammen mit dem Innenkolben beweglich ist, wiederum mit der Stirnfläche des Muffengehäuses in einer Ebene angeordnet ist.

Der Fluiddurchgang durch die Hydraulikkupplungsmuffe kann hier und auch bei anderen später genannten Ausführungen durch einen Kanal in der Druckhülse gebildet sein, der durch den Muffenstößel öffenbar und verschließbar ist, so wie es im Stand der Technik bekannt ist. Alternativ kann es bei den Ausführungen der Erfindung auch vorgesehen sein, dass der Fluiddurchgang durch einen Kanal mit Mündungsöffnung im Muffenstößel realisiert ist, wobei der Kanal, insbesondere die Mündung durch die Druckhülse öffenbar und verschließbar ist. Bei allen Ausführungen ist es wesentlich, dass das Öffnen und Schließen des Fluiddurchgangs durch eine relative Bewegung in axialer Richtung zwischen Muffenstößel und Druckhülse erfolgt.

Unter der Achse, bzgl. der die einzelnen Bauelemente parallel bevorzugt koaxial verschieblich sind, wird dabei die Längsachse der Hydraulikkupplungsmuffe verstanden, insbesondere somit die mittlere Richtung des Fluidflusses zwischen Muffe und Stecker.

Die erfindungsgemäße Hydraulikkupplungsmuffe hat gegenüber der im Stand der Technik bekannten Hydraulikkupplungsmuffe den besonderen Vorteil, dass der Muffenstößel nunmehr nicht mehr starr im Muffengehäuse angeordnet ist, sondern zusammen mit einem im Muffengehäuse angeordneten Innenkolben, an welchem dieser Muffenstößel befestigt ist, axial relativ zum Muffengehäuse vor und zurück bewegt werden kann, insbesondere während der Fluiddurchgang durch die Hydraulikkupplungsmuffe geschlossen bleibt, da Muffenstößel und Druckhülse gleichzeitig und somit lagestabil zueinander bewegt werden.

In einer möglichen erfindungsgemäßen Ausführung kann es hier vorgesehen sein, dass der Innenkolben durch Hydraulikfluid in wenigstens einem Steuerraum kraftbeaufschlagt/kraftbeaufschlagbar ist, der zumindest zum Teil durch eine Kolbenfläche des Innenkolbens begrenzt ist. Dies bedeutet, dass durch eine Druckänderung im Steuerraum eine axial auf den Innenkolben wirkende Kraft geändert werden kann.

Wenn der wenigstens eine Steuerraum in Richtung zu einem Hydraulikkupplungsstecker durch eine Kolbenfläche des Innenkolbens begrenzt ist bedeutet dies, dass durch eine Druckbeaufschlagung des Steuerraums mit Hydraulikfluid eine auf den Innenkolben wirkende Kraft in Richtung zum Hydraulikkupplungsstecker erzeugt wird. Erfolgt hingegen eine Druckentlastung oder sogar eine Unterdruckerzeugung im Steuerraum, so kann der Innenkolben mit dem Muffenstößel und der Druckhülse in das Innere des Muffengehäuses hinein bewegt werden.

Dies kann dadurch unterstützt sein, dass der Innenkolben in Richtung zum Hydraulikfluidanschluß, d.h. von einem Stecker wegweisend mit einer zusätzlich mechanisch aufgebrachten Kraft belastet ist, z.B. durch eine Druckfeder, die zwischen einem Anlagebereich am Innenkolben und dem Muffengehäuse abgestützt ist. Eine solche Druckfeder kann in einer möglichen Alternative im Inneren des Muffengehäuses angeordnet sein oder in einer anderen Alternative außen um das Muffengehäuse und/oder den Innenkolben herum.

Die Kraftrichtung dieser Feder ist damit axial und so orientiert, dass durch diese Kraftwirkung das Volumen des Steuerraums verkleinert wird. Diese Orientierung hat den Vorteil, dass durch die Druckbeaufschlagung des Steuerraums mit Hydraulikfluid sehr große Kräfte aufgebracht werden können, um den Muffenstößel in einen an der Muffe verriegelten Stecker hineinzubewegen und dessen Steckerstößel gegen eine evtl. wirkende Kraft in den Stecker zu drücken und so dessen Fluiddurchgang zu öffnen.

Selbstverständlich kann die Orientierung zwischen Steuerraum und Kolbenfläche, sowie Feder umgekehrt werden. Sodann bewirkt eine Druckbeaufschlagung, dass der Innenkolben mit Muffenstößel und Druckhülse in das Muffengehäuse bewegt wird.

Bevorzugt kann hier der wenigstens eine Steuerraum den Innenkolben ringförmig umgeben und durch den Innenkolben und das Muffengehäuse umgrenzt sein. Hierfür kann der Innenkolben an der Innenwandung des Muffengehäuses gedichtet verschieblich unter Einschluss des Ringraumes zwischen zueinander weisenden Wandungen dieser Bauteile geführt sein.

Der Steuerraum umfasst einen Anschluß an eine Steuerleitung, mit der Hydraulikfluid zum Steuerraum geführt ist, um diesen anforderungsgemäß mit Druck zu beaufschlagen oder zu entlasten. In einer möglichen Ausführung kann der Innenkolben eine solche Hydraulikfluidsteuerleitung umfassen, die in den Steuerraum mündet. Diese Steuerleitung kann zumindest größtenteils parallel zur Hauptförderrichtung des zu fördernden Hydraulikfluid angeordnet sein, insbesondere somit achsparallel.

In einer bevorzugten Ausführung kann der Innenkolben auf der einem Hydraulikkupplungsstecker abgewandten Seite verschieblich aus dem Muffengehäuse herausragen und einen Anschluß für das zu fördernde Hydraulikfluid aufweisen. Dieser Anschluß kann durch das Innere des Innenkolbens mit dem Inneren der Druckhülse verbunden sein oder mit einem Kanal im Muffenstößel, in jedem Fall aber mit dem Fluiddurchgang verbunden sein.

Bei einer Ausführung mit außen liegender Druckfeder, die zwischen Innenkolben und Muffengehäuse wirkt, kann ein Ende der Druckfeder an einem fluidanschlussseitigen Anschlag am Innenkolben, also an dem aus dem Muffengehäuse herausragenden Teil befestigt sein, wohingegen die andere Seite der Druckfeder an einem steckerseitigen Bereich des Muffengehäuses befestigt ist.

Wird demnach eine solche erfindungsgemäße Hydraulikkupplungsmuffe mit dem Hydraulikfluidanschluß des aus dem Muffengehäuse herausragenden Innenkolbens an einer Fluidzuführung, z.B. einer Hydraulikpumpe oder einer Arbeitsmaschine befestigt, so ist der Innenkolben an der Fluidzuführung örtlich festgelegt, so dass das zuvor beschriebene relative Bewegen des Innenkolbens in das Innere des Muffengehäuses in diesem Fall bedeutet, dass das Muffengehäuse auf dem Innenkolben in Richtung zu einem anzukuppelnden Stecker bewegt wird, insbesondere was hier durch Druckentlastung des Steuerraumes und die wirkende Druckfeder erfolgt.

Hierdurch ergibt sich eine optische Verlängerung der Hydraulikkupplungsmuffe, so dass eine arbeitende Person auch visuell erkennt, dass die Muffe kupplungsbereit ist. Auch erkennt man an der Stirnflächenebene der Hydraulikkupplungsmuffe, dass die Stirnfläche des Muffenstößels im Muffengehäuse liegt, also eine kreisrunde Öffnung in dieser vorgenannten Ebene freigibt.

Es kann nun ein Hydraulikkupplungsstecker in die Muffe eingeführt werden, wofür bei dieser Ausführung nur noch durch den Hydraulikkupplungsstecker die für die Sicherungselemente vorgesehene Haltehülse gegen deren Feder-Kraftbeaufschlagung zurückgedrückt werden muss, bis dass die Sicherungselemente in die Ringnut auf dem Stecker eingreifen. Dies kann durch manuell aufzubringende Kraft erfolgen.

In diesem Augenblick kann es - wie bei allen Erfindungsausführungen - vorgesehen sein, dass eine verschiebliche zum Stecker kraftbeaufschlagte Sicherungshülse über die Sicherungselemente herüberfährt und diese in der Lage sichert, so dass der Stecker nicht mehr zurückgezogen werden kann.

Durch eine Druckbeaufschlagung des Steuerraums kann sodann eine relative Bewegung zwischen Innenkolben und Muffengehäuse erfolgen, bei der bezogen auf das Muffengehäuse der mit dem Innenkolben bewegte Muffenstößel in Richtung zum Stecker bewegt wird, bzw. bezogen auf den ortsfesten Innenkolben das Muffengehäuse zum Fluidanschluss bewegt wird und so visuell den Stecker in diese Richtung mitzieht. Dies bewirkt, dass durch den Muffenstößel der Steckerstößel in das Steckerinnere gedrückt wird und der Fluiddurchgang durch Muffe und Stecker geöffnet wird.

In einer anderen Ausführung kann es auch vorgesehen sein, dass aufgrund einer gleichzeitigen koaxialen Bewegbarkeit der bereits eingangs genannten Haltehülse und der Druckhülse sowie der erfindungsgemäß weiter hinzugekommenen achsparallelen, bevorzugt koaxialen Beweglichkeit von Muffenstößel und Innenkolben nunmehr bei einem Kupplungsvorgang ein Hydraulikkupplungsstecker bevorzugt manuell in das Muffengehäuse in axialer Richtung eingeführt werden kann, wiederum ohne dass, so wie es beim Stand der Technik der Fall war, durch den Muffenstößel der Steckerstößel axial gegen den Innendruck im Stecker bewegt wird. Bei dieser Ausführung erfolgt im Gegensatz zu der zuvor genannten hydraulisch initiierten und durch Federkraft unterstützten Bewegung nunmehr die Bewegung der Gesamtanordnung aus Innenkolben, Muffenstößel, Druckhülse und Haltehülse gleichzeitig durch das Einstecken des Hydraulikkupplungssteckers in die Muffe, insbesondere per Hand.

Es wird hier durch den Innendruck oder auch durch eine axiale Kraftbeaufschlagung mittels einer Feder der Steckerstößel des Hydraulikkupplungssteckers in seiner Ausgangslage gehalten, in welcher dessen Stirnfläche mit der äußeren ringförmig den Stößel umgebenden Stirnfläche des Steckergehäuses in einer Ebene liegt.

Diese so beibehaltene dichte Anordnung des Hydraulikkupplungssteckers fährt demnach beim Kupplungsvorgang ungeändert in das Muffengehäuse ein und verschiebt hierbei die eingangs beschriebene Gesamtanordnung aus dem beweglichen Muffenstößel, daran angeordneten Innenkolben, Druckhülse und Haltehülse gleichzeitig, so dass auch in der Hydraulikkupplungsmuffe deren Fluiddurchgang geschlossen bleibt.

Bei der erfindungsgemäßen Muffenhülse muss bevorzugt kein Innendruck überwunden werden. Der Druck im Muffengehäuse kann sogar unverändert bleiben. Dies ist z.B. möglich durch Verschieben der inneren Bauteile der Muffe und des Hydraulikfluidvolumens ohne Volumenänderung an sich.

Bei dieser Ausführung kann es auch vorgesehen sein, das Fluid im Inneren der Muffe, gegen welches der Innenkolben arbeitet, z.B. beim Verschiebevorgang aus der Muffe herauszudrücken oder alternativ auch innerhalb der Muffe umzulagern..

Das Einführen des Hydraulikkupplungssteckers kann auch bei dieser Ausführung der erfindungsgemäßen Hydraulikkupplungsmuffe zunächst ohne Beeinflussung der Lage der einzelnen Bauelemente des Steckers vollständig erfolgen, bis dass die Haltehülse zusammen mit der Gesamtheit der übrigen Bauteile soweit axial in das Muffeninnere geschoben ist, dass die bislang zurückgehaltenen Sicherungselemente in eine Ringnut auf der Oberfläche des Steckergehäuses eingreifen können, wie es bereits aus dem Stand der Technik bekannt ist und zuvor beschrieben wurde.

Wie bei allen Ausführungen kann auch hier wiederum durch eine Schiebehülse außen auf dem Muffengehäuse diese eingefahrene Lage der Sicherungselemente, beispielsweise von Kugeln, zusätzlich gesichert werden, was beispielsweise dadurch erfolgen kann, dass die Haltehülse automatisch durch eine Kraftbeaufschlagung, z.B. durch eine Federvorspannung, im Augenblick des radialen Bewegens der Sicherungselemente in axialer Richtung über diese herüberfährt und somit ein radiales Zurückweichen der Sicherungselemente verhindert und dadurch den sicheren Sitz des Kupplungssteckers in der Muffe gewährleistet.

Bis zu diesem Zustand sind erfindungsgemäß auch bei dieser Ausführung so wie bei der zuvor beschriebenen sowohl der Fluiddurchgang in der Muffe als auch der Fluiddurchgang im Stecker weiterhin geschlossen, so dass keinerlei Leckagerisiko gegeben ist.

Durch das vollständige Einschieben des Steckers in die zuvor beschriebenen Ausführungen der erfindungsgemäßen Hydraulikkupplungsmuffe erreicht demnach die Gesamtanordnung der vorzitierten Bauteile innerhalb der Muffe eine Endposition, von der ausgehend die Gesamtheit aus Muffenstößel, Innenkolben und Druckhülse zurückschiebbar ist in Richtung des Steckers.

Dieses Zurückschieben kann beispielsweise dadurch erfolgen, dass durch eine Fluiddruckbeaufschlagung eine Kraft auf diese Gesamtheit der benannten Bauteile ausgeübt wird, die axial in Richtung des Steckers wirkt und demnach Muffenstößel, Innenkolben und Druckhülse in diese Richtung verschiebt, wie es auch schon bei der vorherigen Ausführung beschrieben wurde.

Dabei kann es vorgesehen sein, dass die Kraft, die durch die Druckbeaufschlagung erzeugt wird, unmittelbar auf den Innenkolben und damit auf den Muffenstößel wirkt und diese beiden Teile relativ zum Muffengehäuse axial bewegt, wobei sich die Druckhülse an dem Muffenstößel oder bevorzugt dem Innenkolben über eine Druckfeder abstützt, hierdurch gegen den Dichtsitz am Muffenstößel gedrückt wird und deswegen zusammen mit diesem in axialer Richtung zum Stecker mitgeführt wird, wie es auch bei der vorher beschrieben Ausführung der Fall ist. Der Hydraulikfluidanschluss kann bei dieser Ausführung direkt am Muffengehäuse vorgesehen sein, so dass dieses Muffengehäuse zu einem Hydraulikfluidanschluss ortfest ist und die Bewegung des Innenkolbens nur innerhalb des Muffengehäuses erfolgt.

Hierbei bleibt die Haltehülse in ihrer ursprünglich erreichten inneren Endposition, da diese durch das Zusammenwirken mit der Stirnfläche des äußeren Steckergehäuses axial festgelegt ist.

Da durch das Zurückbewegen der Gesamtheit aus Muffenstößel, Innenkolben und Druckhülse zunächst die Dichtigkeit zwischen Muffenstößel und Druckhülse sicher gestellt bleibt, insbesondere das vordere freie Ende der Druckhülse und der der Stirnseite des Muffenstößels abgewandte Dichtbereich des Muffenstößels in Eingriff miteinander bleiben, beispielsweise durch die genannte Kraftbelastung der Druckhülse in axialer Richtung auf den Dichtsitz zu, wird bei allen Ausführungen gewährleistet, dass auf dem Verschiebeweg bis zu einer Anschlagposition, bei der die Druckhülse an einen Anschlag z.B. der Haltehülse oder des Muffengehäuses axial festgelegt wird, kein Fluiddurchtritt gegeben ist.

Bei dieser Bewegung der Gesamtheit aus Innenkolben, Muffenstößel und daran gedichtet anliegender Druckhülse wird bei allen Ausführungen gleichzeitig durch die Anlage der Stirnfläche des Muffenstößels an der flächengleichen Stirnfläche des Steckerstößels dieser um dieselbe Verschiebeweite axial in das Innere des Kupplungssteckers verschoben, so dass der Fluiddurchgang steckerseitig geöffnet wird. Dabei kann die dieser Verschiebung des Steckerstößels entgegenwirkende Kraft vollständig aufgebracht werden durch die innere Kraftbeaufschlagung der Gesamtheit aus Innenkolben, Muffenstößel und Druckhülse, so dass bei der erfindungsgemäßen Vorrichtung diese Kraft nunmehr nicht mehr manuell von einer bedienenden Person aufgebracht werden muss, sondern vielmehr maschinell durch den Fluiddruck zur Verfügung gestellt wird.

Es besteht daher die Möglichkeit, mit der erfindungsgemäßen Muffe der vorbeschriebenen Ausführungsarten auch vollständig unter Druck stehende Hydraulikkupplungsstecker nach ihrer Verrastung an einer erfindungsgemäßen Kupplungsmuffe durch die fluidtechnische Ansteuerung des Muffenstößels automatisch und maschinell zu öffnen.

Bei der Zurückbewegung der Gesamtheit aus Innenkolben, Muffenstößel und Druckhülse in Richtung des Steckers unter gleichzeitiger Verschiebung des Steckerstößels wird bei allen hier beschriebenen Ausführungen auf dem Verschiebeweg erfindungsgemäß die Druckhülse bis zu einer Anschlagsposition bewegt, bei welcher die Druckhülse axial festgelegt ist. Dieser Anschlag kann beispielsweise zwischen Druckhülse und Haltehülse oder auch Druckhülse und Muffengehäuse realisiert sein.

Ab dieser Anschlagposition wird demnach bei der weiteren Kraftbeaufschlagung des Innenkolbens bzw. des daran angeordneten Muffenstößels aufgrund des Anschlags der Druckhülse nunmehr bei allen Ausführungen nur noch der Innenkolben mit Muffenstößel in axialer Richtung auf den Stecker zu weiterbewegt, so dass sich durch die dadurch hervorgerufene Relativbewegung zu der dann feststehenden Druckhülse sich der Fluiddurchgang in der Hydraulikkupplungsmuffe öffnet, z.B. dadurch dass der Dichtbereich des Muffenstößels von der Stirnseite der Druckhülse abhebt oder dadurch dass eine bevorzugt radiale Mündungsöffnung eines Kanals im Muffenstößel durch die Druckhülse frei gegeben wird. Es ist sodann der Gesamtdurchgang für das Hydraulikfluid durch die Muffe und durch den Stecker realisiert.

In einer Weiterbildungsvariante kann es vorgesehen sein, dass der Innenkolben, an welchem der Muffenstößel befestigt ist, direkt durch das durch die Hydraulikkupplungsmuffe zu fördernde Hydraulikfluid kraftbeaufschlagt ist. In dem Fall, wenn demnach ein Hydraulikkupplungsstecker an der erfindungsgemäßen Muffe verriegelt ist, kann durch das Beaufschlagen der Muffe mit dem zu fördernden Fluid oder des bei der vorherigen Ausführung genannten Steuerraums, beispielsweise durch Einschalten einer hydraulischen Druckquelle / einer Versorgungseinheit das innere Volumen der Hydraulikkupplungsmuffe bzw. der Steuerraum unter Druck gesetzt werden, so dass hierdurch gleichzeitig der Innenkolben aufgrund der wirkenden Kraft relativ zum Muffengehäuse verschoben wird. So wird das Öffnen des Hydraulikkupplungssteckers und der Muffe durch den Betriebsdruck des Gesamtsystems bewirkt.

Für diese Ausführung ist es demnach ausreichend, wenn der Innenkolben im Inneren des Muffengehäuses achsparallel, bevorzugt koaxial verschieblich gelagert ist und das Innere durch das zu fördernde hydraulikfluidgefüllte Volumen demnach gleichzeitig einen druckbeaufschlagbaren Steuerraum ausbildet, durch den der Kolben axial verlagert werden kann. In diesem Fall bildet das Muffengehäuse der erfindungsgemäßen Hydraulikkupplungsmuffe ein dem Innenkolben zugeordnetes Zylindergehäuse.

In einer anderen Ausführungsform kann es auch vorgesehen sein, dass der Innenkolben in einem im Muffengehäuse angeordneten Einsatz achsparallel, bevorzugt koaxial verschieblich geführt ist, der vom durch die Hydraulikkupplungsmuffe zu fördernden Hydraulikfluid umgeben ist, wobei im Einsatz ein vom Innenkolben, insbesondere steckerseitig begrenzter Steuerraum angeordnet ist, der eine separate Fluidzu- und -abführung aufweist.

Bei dieser Ausführungsform ist demnach der im Einsatz angeordnete Steuerraum getrennt vom inneren Volumen des Muffengehäuses (so wie auch der bei der eingangs genannten Ausführung beschriebenen ringförmige Steuerraum), so dass das durch die Muffe zu fördernde Hydraulikfluid den Einsatz umgibt, insbesondere ringförmig den Einsatz umfließt. Hierbei kann es in einer bevorzugten Ausführung sodann vorgesehen sein, dass die Druckhülse, die von dem zu fördernden Hydraulikfluid von außen angeströmt wird, in deren Wandung Fluiddurchgänge, beispielsweise radiale Fluiddurchgänge aufweist, mittels denen das den Einsatz umgebende Hydraulikfluid, welches durch die Muffe gefördert werden soll, in das Innere der Druckhülse leitbar ist.

Die vorbeschriebene Ausführung eines separaten Einsatzes hat hierbei den Vorteil, dass der durch Einsatz und Innenkolben begrenzte Steuerraum separat, d.h. unabhängig vom wirkenden Druck im Inneren der erfindungsgemäßen Muffe, druckentlastet oder auch mit Druck beaufschlagt werden kann wie es auch bei der anfänglich beschriebenen Ausführung mit ringförmigen Steuerraum zutrifft.. Dies bedeutet gleichsam, dass eine unter Druck stehende erfindungsgemäße Muffe problemlos verwendet werden kann, um einen Stecker darin anzukoppeln, da das Hydraulikfluid im Inneren der erfindungsgemäßen Muffe lediglich in radialer Richtung Kräfte auf die Druckhülse ausübt, demnach also keine der axialen Verschiebung entgegenwirkenden Kräfte erzeugt.

Durch eine Verschiebung der Gesamtheit aus Innenkolben, Muffenstößel, Druckhülse und ggfs. auch der Haltehülse wird hingegen bei den Ausführungen mit separatem Steuerraum eine Komprimierung des Steuerraumvolumens hervorgerufen, wobei jedoch nun das darin befindliche Fluid durch eine Leitung aus dem Steuerraum herausgeleitet werden kann, so dass hierdurch eine Druckentlastung des Steuerraums stattfindet und die Verschiebung der vorgenannten Bauteilgesamtheit erfolgen kann, ohne dass eine Entlastung der erfindungsgemäßen Muffe vom gesamten Hydrauliksystem stattfinden muss.

Es besteht weiterhin der Vorteil, dass nach einem stattgefundenen Verkuppeln zwischen Stecker und Muffe die Kraft zur Verschiebung des Innenkolbens zusammen mit dem Muffenstößel und der Druckhülse nunmehr unmittelbar durch eine Druckbeaufschlagung dieses jeweils vorbeschriebenen Steuerraums erfolgen kann, wofür ein entsprechendes Hydraulikfluid in diesen separaten Steuerraum, entweder den des Einsatzes oder den ringförmigen Steuerraum der vorherigen ausführung durch eine, insbesondere dieselbe vorgenannte Leitung zugeführt werden kann. Hierfür kann in einer möglichen Ausführung das unter Druck stehende Hydraulikfluid verwendet werden, welches aus dem gesamten Hydrauliksystem für den Betrieb, beispielsweise einer Arbeitsmaschine, zur Verfügung gestellt wird.

In einer anderen weiterhin alternativen Ausführungsform, kann es auch vorgesehen sein, dass der Innenkolben, an welchem der Muffenstößel befestigt ist, zwei Steuerräume voneinander trennt, wobei eine Verschiebung des Innenkolbens jeweils eine Volumenvergrößerung des einen und eine Volumenverkleinerung des anderen Steuerraums bewirkt. Dabei sind die Volumenvergrößerung und -verkleinerung betragsmäßig bevorzugterweise identisch.

Bei dieser erfindungsgemäßen Ausführungsform besteht demnach die Möglichkeit, eine Anordnung derart vorzusehen, dass im ursprünglichen ungekuppelten Zustand die erfindungsgemäße Muffe eine Position der Gesamtheit der Bauteile aus Innenkolben, Muffenstößel, Druckhülse und bevorzugt auch der Haltehülse einnimmt, bei welcher einer der Steuerräume, insbesondere der, welcher zur Steckerseite weist, im Volumen minimiert ist und der zweite Steuerraum, insbesondere der zur Seite der Fluidzuführung weist, maximales Volumen aufweist.

Hierdurch wird erreicht, dass nach einer Verschiebung dieser vorbeschriebenen Gesamtanordnung (manuell oder hydraulisch initiiert) und einer Änderung der Volumenverhältnisse nachträglich durch eine Druckbeaufschlagung desjenigen Steuerraums, der zur Fluidanschlussseite weist, der Innenkolben mit dem daran befestigten Muffenstößel wieder vollständig zurück in die Ausgangslage geführt werden kann, die diese beiden Bauteile im ungekuppelten Zustand einnahmen.

Konstruktiv kann die Anordnung von zwei Steuerräumen beispielsweise dadurch erzielt sein, dass ein Ringraum zwischen einem hülsenförmigen, insbesondere hohlen Innenkolben und der Innenwandung des Muffengehäuses vorgesehen ist, der den Innenkolben demnach koaxial umgibt und der durch einen ringförmigen Vorsprung auf der Mantelfläche des Innenkolbens in die beiden axial beabstandeten Steuerräume unterteilt ist. Demnach bilden hierbei die beiden axialen Stirnflächen des Vorsprungs Kolbenflächen, die jeweils einen der Steuerräume begrenzen. Um eine dichte Unterteilung des Ringraums in die beiden Steuerräume zu erzielen, kann es dabei vorgesehen sein, dass der ringförmige Vorsprung in radialer Richtung an der Innenwandung des Muffengehäuses gedichtet anliegt, z.B. dadurch, dass der ringförmige Vorsprung eine Ringnut aufweist, in welcher ein O-Ring einliegt.

Bei dieser Ausführung kann eine Verschiebung der genannten Gesamtheit aus Innenkolben, Muffenstößel, Druckhülse und bevorzugt auch der Haltehülse durch manuelle Kraft erfolgen, wobei Hydraulikfluid aus einem der beiden Steuerräume verdrängt wird und Hydraulikfluid, insbesondere das verdrängte, in den anderen einströmt. Die Verschiebung kann auch automatisiert erfolgen, wenn einer der Steuerräume durch Hydraulikfluid druckbeaufschlagt und der andere druckentlastet wird. Bei der automatisierten Verschiebung gehört die Haltehülse bevorzugt nicht zur bewegten Gesamtheit, sondern verbleibt durch Federbelastung in der ursprünglichen Stellung bis zum Einstecken des Hydraulikkupplungssteckers.

In bevorzugter Ausführung kann es hier vorgesehen sein, dass derjenige Steuerraum, dessen Volumen sich beim Verschieben des Innenkolbens, insbesondere während der Einführung eines Hydraulikkupplungssteckers, in die Hydraulikkupplungsmuffe vergrößert, also insbesondere der Steuerraum bei der vorgenannten Anordnung, der zur Steckerseite weist, mit dem inneren Volumen der Hydraulikkupplungsmuffe verbunden ist, durch welches das Hydraulikfluid durch die Muffe zum Stecker geführt ist.

Diese Verbindung zwischen Steuerraum und innerem Volumen der Hydraulikkupplungsmuffe kann durch eine im Muffengehäuse liegende innere kanalartige Verbindung erfolgen oder auch durch eine externe Leitungsführung. Sie bewirkt, dass ein Druckausgleich in dem Steuerraum stattfinden kann, wenn dieser sich im Volumen durch das axiale Verschieben der Gesamtanordnung der vorzitierten Bauelemente, insbesondere beim Einführen eines Steckers vergrößert. Hierbei kann demnach aus dem inneren Volumen der Muffe Hydraulikfluid in den sich vergrößernden Steuerraum nachfließen.

In einer bevorzugten Weiterbildung kann es sodann auch vorgesehen sein, dass derjenige Steuerraum, dessen Volumen sich beim Verschieben des Innenkolbens, insbesondere während des Einführens eines Hydraulikkupplungssteckers in die Hydraulikkupplungsmuffe verkleinert, also insbesondere derjenige, welcher der Anschlussseite der Hydraulikkupplungsmuffe zugewiesen ist, einen Anschluss aufweist, der wahlweise verbindbar bzw. verbunden ist mit einer Ableitung zur Aufnahme von verdrängtem Hydraulikfluid, wie z.B. einem Niederdruckspeicher oder auch einer Niederdruckleitung oder wahlweise verbindbar ist mit einer Zuführung zur Abgabe von Hydraulikfluid in den Steuerraum, wie beispielsweise aus einem Hochdruckspeicher oder einer Hochdruckleitung.

So kann zunächst durch diese Ausführung sicher gestellt werden, dass beim Einführen eines Steckers in die erfindungsgemäße Muffe und die dadurch hervorgerufene Verkleinerung dieses Steuerraums das dabei verdrängte Hydraulikfluidvolumen nach außen aus der Muffe hinaus abgeleitet wird. Diese Ableitung kann beispielsweise erfolgen in den Tank, welcher im gesamten Hydrauliksystem zur Verfügung gestellt wird oder auch einen separaten Niederdruckspeicher oder eine Niederdruckleitung.

Dabei wird unter einem Niederdruckspeicher ein solcher Speicher, d.h. ein Behältnis für Hydraulikfluid verstanden, welches einen hydraulischen Druck aufweist, der geringer ist als der Druck im Steuerraum und/oder dem Gesamtsystem, d.h. insbesondere dem inneren Volumen der Muffe. Gleiches gilt für eine Niederdruckleitung.

Die wahlweise Verbindbarkeit mit einer Zuführung zur Abgabe von Hydraulikfluid hat dabei weiterhin den Vorteil, dass dann, wenn ein Hydraulikkupplungsstecker vollständig in die erfindungsgemäße Muffe eingeführt und darin gesichert ist, durch denselben Anschluss Hydraulikfluid in diesen Steuerraum zugeführt werden kann. Die Zuführung kann dabei erfolgen z.B. mit der Hydraulikpumpe, welche auch das Fördern der Hydraulikflüssigkeit durch Stecker und Muffe bewirkt oder aber auch durch einen separaten Hochdruckspeicher oder eine separate Hochdruckleitung.

Hierbei wird unter einem Hochdruckspeicher ein solcher Vorratsbehälter für Hydraulikflüssigkeit verstanden, der unter einem solchen hohen Druck steht, dass damit ein Fördern von Fluid in den Steuerraum ermöglicht ist. Gleiches gilt für eine Hochdruckleitung.

Es wird sodann durch diese Zuführung bewirkt, dass Innenkolben und Muffenstößel zusammen mit der Druckhülse wie eingangs beschrieben aufgrund der wirkenden Kräfte axial verschoben werden, hierdurch zunächst der Stecker und sodann die Muffe geöffnet wird, wobei es auch je nach konstruktiver Ausgestaltung vorgesehen sein kann, dass das Öffnen von Muffe und Stecker gleichzeitig erfolgt oder in umgekehrter Reihenfolge.

In einer weiteren Ausführungsvariante kann es auch vorgesehen sein, eine Muffenanordnung bereitzustellen, die zwei oder mehrere erfindungsgemäße Muffen der vorbeschriebenen Art mit jeweils den zwei bzw. der entsprechenden Anzahl an Steuerräumen sowie einen gemeinsamen Speicher zur Aufnahme und einen gemeinsamen Speicher zur Zuführung von Fluid, beispielsweise den zuvor genannten Niederdruck- und Hochdruckspeicher aufweist, wobei jeder der Speicher durch wenigstens ein Ventil wahlweise gleichzeitig mit den Steuerräumen beider Muffen verbindbar ist, deren Volumen sich beim Verschieben des Innenkolbens während des Einführens eines Hydraulikkupplungssteckers in die Hydraulikkupplungsmuffe verkleinert.

Diese Anordnung hat den Vorteil, dass durch die hydraulische Verschaltung der vorbeschriebenen Art gleichzeitig oder auch nacheinander ein Ankuppeln von zwei oder mehreren Steckern an zwei bzw. einer entsprechenden Anzahl erfindungsgemäßer Muffen erfolgen kann, wie es üblicherweise beim Betrieb von Arbeitsmaschinen vorgesehen ist. Hier wird nämlich üblicherweise eine Verbindung aus Muffe und Stecker vorgesehen, um unter Druck stehendes Hydraulikfluid von einer Pumpenanordnung oder einem hydraulischen Hochdruckerzeuger jeglicher Art zu einer Arbeitsmaschine zu leiten, wohingegen das Hydraulikfluid nach der Energieabgabe in der Arbeitsmaschine in einen Auffangtank zurückgeführt wird durch eine Kupplung, umfassend eine hier erfindungsgemäße zweite Muffe zusammen mit einem Stecker.

Vorteilhafterweise wird bei der beschriebenen Anordnung zusammen mit den Speichern ein gleichzeitiges Verkuppeln beider erfindungsgemäßer Muffen erzielt, wie es zuvor beschrieben wurde, wobei das aus dem anschlussseitigen Steuerraum verdrängte Fluid beim Einfügen der beiden Stecker gleichzeitig in den vorbeschriebenen Speicher, beispielsweise einen sogenannten Niederdruckspeicher abgeführt wird.

Nach dem Vorgang des Verkuppelns beider Stecker mit den beiden erfindungsgemäßen Muffen kann sodann in gleicher Weise wie zuvor beschrieben durch die Druckbeaufschlagung des genannten Steuerraums, der sich anschlussseitig befindet, das Zurückfahren von Innenkolben, Muffenstößel und Druckhülse bei beiden erfindungsgemäßen Muffen gleichzeitig oder auch nacheinander erfolgen.

In einer bevorzugten erfindungsgemäßen Weiterbildung einer solchen Muffenanordnung kann es dabei vorgesehen sein, dass diese Anordnung eine hydraulische Anordnung aufweist, beispielsweise ein Wechselventil mit zwei Eingangsseiten und einer Ausgangsseite, mit der die im Druck höhere Eingangsseite auf die Ausgangsseite aufschaltbar ist und die mit der Ausgangsseite insbesondere über ein Rückschlagventil mit dem Speicher zur Abgabe von Fluid, insbesondere im Hochdruckspeicher verbunden ist und die mit je einer der beiden Eingangsseiten mit dem inneren Volumen je einer der beiden Muffen verbunden ist.

Diese Ausführung hat den besonderen Vorteil, dass der Hochdruckspeicher, der durch das Verschieben des oder der Muffenstößel zum Zwecke des Öffnens von Muffe und Stecker entleert ist, wieder mit unter Druck stehendem Fluid aufgeladen werden kann, da nämlich zumindest eine der beiden erfindungsgemäßen Muffen hochdruckseitig Verwendung findet und demnach durch das Wechselventil immer das innere Volumen dieser hochdruckseitigen Muffe an den Hydraulikspeicher angeschaltet wird, so dass automatisch im Betrieb eines hydraulischen Systems, wie beispielsweise jeglicher Art von Arbeitsmaschine, der Hochdruckspeicher wieder aufgeladen wird, um einen späteren zukünftigen Kupplungsvorgang wiederum zu unterstützen.

Alternativ kann es selbstverständlich auch bei einer Muffenanordnung aus zwei oder auch mehreren erfindungsgemäßen Muffen vorgesehen sein, dass die beiden Steuerräume, die sich anschlussseitig befinden, also beim Kuppeln in ihrem Volumen verkleinert werden, direkt durch den Druck in der hydraulischen Leitung beaufschlagt sind, mit welcher das Fluid durch die Muffen zu den Steckern geführt wird. Es wird dadurch automatisch ein Öffnen von Muffe und Stecker bewirkt, wenn das hydraulische System in Betrieb genommen wird, d.h. unter Druck steht.

Es kann weiterhin bei einer solchen Muffenanordnung mit zwei Speichern auch vorgesehen sein, dass sie eine Parallelschaltung zweier Rückschlagventile aufweist, deren Eingangsseiten gemeinsam mit dem Speicher zur Aufnahme von Fluid, insbesondere dem Niederdruckspeicher verbunden sind und die mit je einer der beiden Ausgangsseiten mit dem inneren Volumen je einer der beiden Muffen verbunden ist.

Hierdurch wird erfindungsgemäß erzielt, dass ein beim Einstecken der Stecker aufgeladener Speicher für zukünftige Ladevorgänge entladen, d.h. von dem gespeicherten Hydraulikfluid entleert wird, da durch die Parallelschaltung der beiden Rückschlagventile sicher gestellt wird, dass dieser Niederdruckspeicher immer in die Richtung derjenigen Muffe entladen wird, deren inneres Volumen den geringeren Druck von beiden Muffen dieser erfindungsgemäßen Anordnung aufweist.

In einer bevorzugten Weiterbildung kann es dabei auch vorgesehen sein, dass die beiden Muffen und die Speicher, demnach insbesondere der Hoch- und Niederdruckspeicher, sowie in besonders bevorzugter Ausgestaltung auch die weiteren hydraulischen Komponenten wie die eingangs genannte Wechselventilanordnung sowie die Rückschlagventile der vorbeschriebenen Parallelschaltung alle in einer gemeinsamen Baueinheit integriert sind. Eine solche Baueinheit kann demnach auch die benötigten Ventile umfassen, mit denen wahlweise Hoch- und Niederdruckspeicher an zumindest einen der beiden Steuerräume angeschaltet werden kann, nämlich denjenigen, der bei einem Einführen von Steckern in die Muffe im Volumen reduziert wird.

Ausführungsbeispiele der Erfindung werden nachfolgend beschrieben. Es zeigen:
- Figuren 1, 2 und 3: eine erste Ausführungsform beim Kupplungsvorgang in zeitlicher Abfolge
- Figuren 4, 5 und 6: eine zweite Ausführungsform beim Kupplungsvorgang in zeitlicher Abfolge
- Figuren 7 - 10: die Arbeitszyklen einer erfindungsgemäßen Anordnung mit zwei Muffen und hydraulischer Verschaltung mit Hoch- und Niederdruckspeichern
- Figuren 11 bis 14: eine dritte Ausführungsform beim Kupplungsvorgang in zeitlicher Abfolge
- Figuren 15 bis 17: eine vierte Ausführungsform beim Kupplungsvorgang in zeitlicher Abfolge
- Figuren 18 bis 20: eine fünfte Ausführungsform beim Kupplungsvorgang in zeitlicher Abfolge

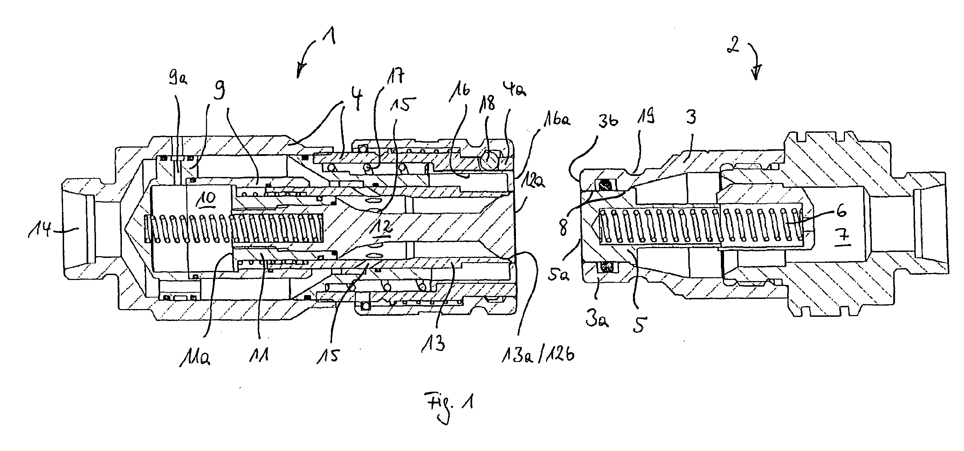

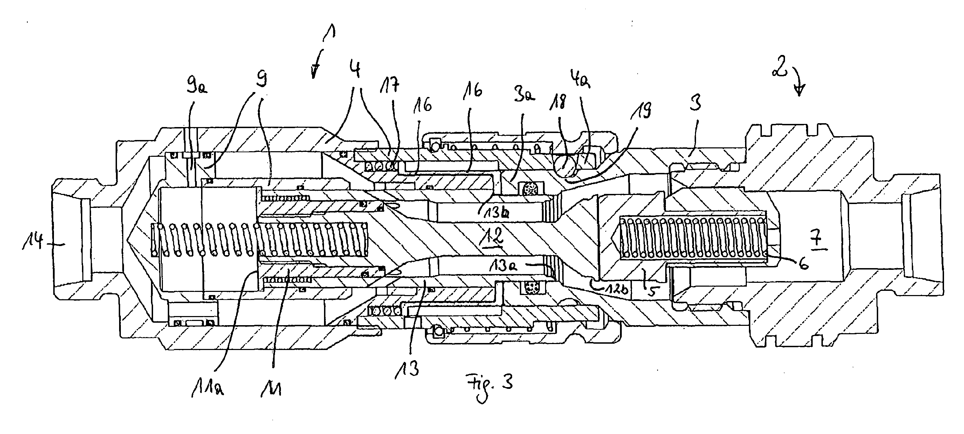

Die Figuren 1 - 3, die nachfolgend gemeinsam beschrieben werden, zeigen in verschiedenen zeitlichen Stufen einen Kupplungsvorgang zwischen einer erfindungsgemäßen Hydraulikkupplungsmuffe 1 und einem im Stand der Technik bekannten Hydraulikkupplungsstecker 2. Der Hydraulikkupplungsstecker 2 weist hierbei ein Steckergehäuse 3 auf, das mit seinem vorderen zylindrischen Bereich 3a in das Muffengehäuse 4 bzw. deren vorderen Bereich 4a einsteckbar ist. Der Stecker 2 weist hier einen vom vorderen Bereich des Steckergehäuses 3a ringförmig umgebenen Steckerstößel 5 auf, der axial kraftbelastet - hier durch eine Druckfeder 6 - in die Richtung zur Muffe 1 verschoben wird. Neben der wirkenden Kraft durch die Feder 6 bewirkt ebenso der hydraulische Druck im inneren Volumen 7 des Steckers 2 eine Kraftbeaufschlagung des Steckerstößels 5, der den inneren Durchgang 8 des Steckers dicht verschließt. Der hier beschriebene Hydraulikkupplungsstecker 2 entspricht im Wesentlichen dem Stand der Technik.

Die erfindungsgemäße Hydraulikkupplungsmuffe 1 ist hingegen eine Weiterbildung, bei welcher in dieser Ausführungsform im Inneren der Muffe 1 ein Einsatz 9 angeordnet ist, der einen Steuerraum 10 umfasst, welcher in axialer Richtung zum Stecker von der Kolbenfläche 11 a eines Innenkolbens 11 begrenzt ist, der in dieser Ausführung koaxial im Muffengehäuse angeordnet ist. An dem Innenkolben 11 ist ein Muffenstößel 12 befestigt, der sich in Richtung zum Stecker 2 erstreckt und koaxial im Muffengehäuse 1 angeordnet ist. Dieser Muffenstößel 2 weist an seinem hier rechtsseitigen vorderen Ende einen im Durchmesser vergrößerten Bereich auf, dessen zum Stecker weisende Stirnfläche 12a flächengleich ist zu der Stirnfläche 5a des Steckerstößels 5. Demnach liegen beim Einsteckvorgang des Steckers in die erfindungsgemäße Muffe diese Stirnflächen 5a und 12a aneinander an.

Um den Muffenstößel 12 ist koaxial eine Druckhülse 13 angeordnet, deren vorderer, zum Stecker weisender Bereich 13a an einem von der Stirnfläche 12a des Muffenstößels abgewandten Seite befindlichen Dichtfläche 12b gedichtet anliegt, so dass das Innere der Druckhülse 13 durch den Muffenstößel 12 in Richtung zum Stecker verschlossen ist.

Der Einsatz 9 wird hier ringförmig von Hydraulikfluid, welches anschlussseitig von der Zuführung 14 in das Innere der Muffe eingeführt wird, umflossen, wobei dieses Hydraulikfluid durch zumindest teilweise radial ausgerichtete Bohrungen 15 von außen durch die Wandung der Druckhülse 13 in deren Inneres geleitet wird. Aufgrund des dichten Verschlusses zwischen dem vorderen Ende 13a der Druckhülse 13 und dem hinteren Dichtbereich 12b des Muffenstößels 12 kann das Hydraulikfluid jedoch aus der Muffe nicht austreten.

Es ist weiterhin erkennbar, dass sowohl der Muffenstößel 12 als auch die Druckhülse 13 hier von einer Haltehülse 16 umgeben sind, die koaxial zu diesen Bauteilen angeordnet ist und eine ringförmige Stirnfläche 16a aufweist, die korrespondierend ist zu der ringförmigen Stirnfläche 3b des vorderen Bereichs des Hydraulikkupplungssteckers 2. Beim Einstecken des Steckers in die Muffe wird demnach durch die Stirnfläche 3b die Stirnfläche 16a der Haltehülse 16 kontaktiert und durch die axiale Bewegung des Steckers in die erfindungsgemäße Muffe die Haltehülse 16 in axialer Richtung in das Innere des Muffengehäuses 4 gegen eine Kraftbelastung durch die Druckfeder 17 verschoben.

Gleichzeitig wird bei dieser erfindungsgemäßen Ausführung der Muffe zusammen mit der Haltehülse 16 auch der Muffenstößel 12 und die linksseitig daran anliegende Druckhülse 13 in das Innere verschoben, so dass bei dieser Ausführung die Gesamtheit von Muffenstößel 12, Innenkolben 11, Druckhülse 13 und Haltehülse 16 axial bewegt wird, ohne dass hierbei eine Relativbewegung zwischen Steckerstößel 5 und Steckergehäuse 3 stattfindet. Bei dem gesamten Einführungsvorgang des Steckers in die erfindungsgemäße Muffe bleibt zunächst die Relativposition zwischen Steckerstößel 5 und Steckergehäuse 3 erhalten und demnach der Stecker vollständig gedichtet.

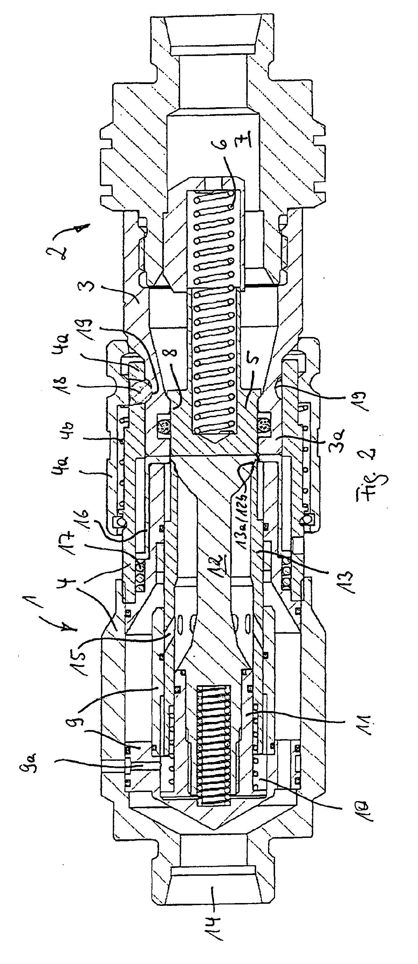

Der Zustand, in welchem der Stecker 2 vollständig in die erfindungsgemäße Muffe 1 eingeführt ist, wird in der Figur 2 dargestellt. Hier ist es erkennbar, dass das innere Volumen des Steuerraumes 10 beim Einsteckvorgang verkleinert wurde, wobei das verdrängte Fluid bei dieser Ausführung durch den Anschluss 9a aus dem Steuerraum 10 verdrängt werden kann. Dieses Verdrängen kann beispielsweise in einen Auffangtank oder auch in einen Druckspeicher erfolgen.

Die Figur 2 zeigt, dass in der Endposition der maximalen Verschiebung der Gesamtanordnung von Muffenstößel 12, Innenkolben 11, Druckhülse 13 und Haltehülse 16 der Stecker 2 an der Muffe 1 verriegelt werden kann, da nunmehr die Haltehülse 16 nicht mehr die Sicherungskugeln 18 unterstützt und diese in die Ringnut 19 auf der Oberfläche des vorderen Teils 3a des Steckergehäuses in radialer Richtung eingreifen können. Durch eine zum Muffengehäuse gehörige äußere Schiebehülse 4a, die ebenso durch eine Druckfeder 4b kraftbeaufschlagt sein kann in Richtung zum Stecker, kann nach dem radialen Zurückweichen der Sicherungskugeln 18 automatisch die Position der Sicherungskugeln 18 gehalten werden, so dass der bislang noch geschlossene Stecker nunmehr an der Muffe sicher verriegelt ist.

Durch eine Druckbeaufschlagung des Steuerraums 10, z.B. durch eine Hydraulikpumpe, die auch das Hydraulikfluid durch Muffe und Stecker fördert oder durch einen separaten Druckerzeuger, wie beispielsweise einen Hochdruckspeicher, kann durch den gleichen Anschluss 9a, durch den das Fluid zuvor verdrängt wurde, nunmehr auch Fluid wieder in den Steuerraum zugeführt werden, wodurch die Gesamtanordnung aus Innenkolben 11, Muffenstößel 12 und Druckhülse 13 in Richtung zum Stecker verschoben wird und hierbei den Steckerstößel 5 axial in das Innere des Steckers 2 zurückschiebt.

Die Bewegung der Druckhülse 13 erfolgt dabei in axialer Richtung zum Stecker so lange, bis dass diese mit einem Anschlag 13a an der Haltehülse 16 anschlägt und somit axial festgehalten wird. Die weitere Druck- bzw. Kraftbeaufschlagung aus dem Steuerraum 10 kann sodann nur noch zu einer Weiterbewegung des Muffenstößels 12 führen, wodurch sich dieser mit seinem Dichtbereich 12b vom vorderen offenen Ende 13a der Druckhülse abhebt und somit den Fluiddurchgang zwischen Muffe und Stecker frei gibt.

Durch die Beschreibung der Figuren 1 - 3 wird hierbei deutlich herausgestellt, dass das Verkuppeln von Stecker und Muffe stattfinden kann, selbst wenn der Stecker vollständig unter Druck steht, da zum Verkuppeln gegenüber dem Stand der Technik nicht der Steckerstößel 5 axial verschoben werden muss. Dies erfolgt hingegen erfindungsgemäß erst dann, wenn der Stecker an der Muffe sicher verriegelt ist und sodann der bewegliche Muffenstößel zusammen mit dem Innenkolben, an welchem er befestigt ist, durch eine Druckbeaufschlagung der Muffe, insbesondere in einem Steuerraum, in welchem der Innenkolben angeordnet ist, erfolgt, so dass der Innenkolben in axialer Richtung auf den Stecker zu verschoben wird und hierbei mit dem Muffenstößel sowohl den Stecker als auch die Muffe aufsteuert.

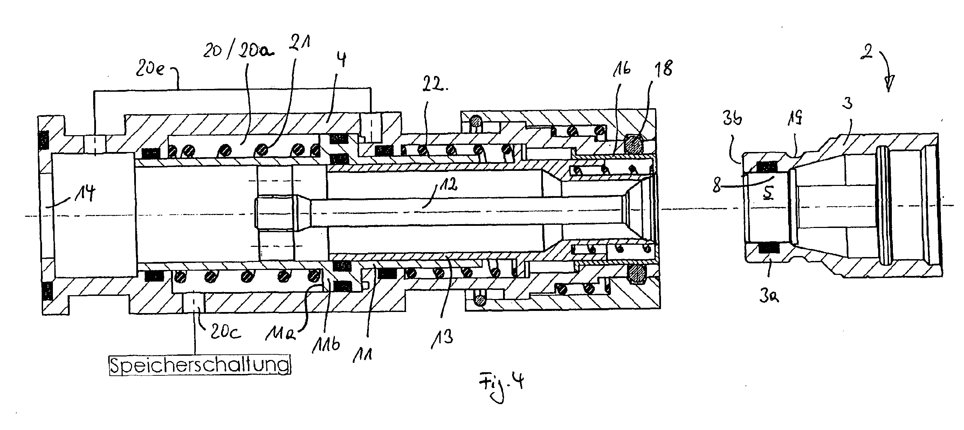

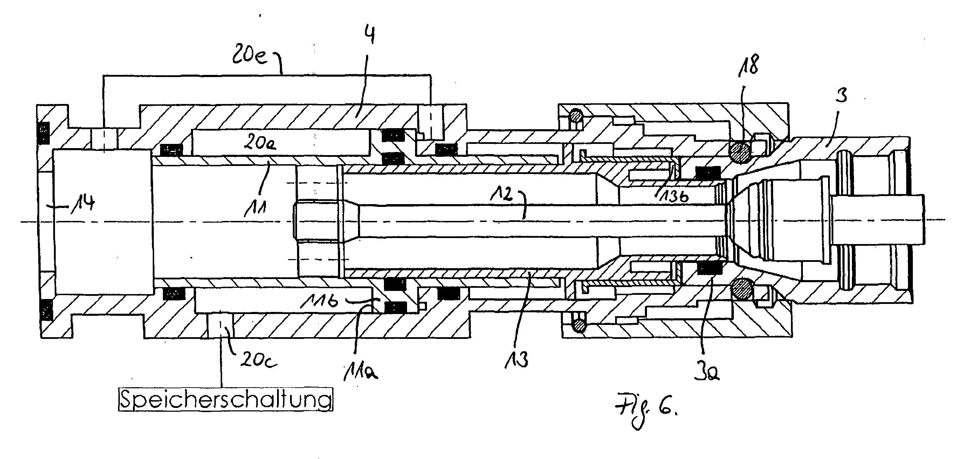

Die Figuren 4 - 6 beschreiben eine alternative Ausführungsform mit an sich gleichen Bauteilen, die auch gleiche Bezugszeichen tragen, wobei hier jedoch der Innenkolben 11 als hohle Hülse ausgebildet und von einem Ringraum 20 koaxial umgeben ist. Dieser Ringraum 20 wird durch einen Vorsprung 11 b, der ringförmig radial nach außen vorspringend auf der Mantelfläche des hülsenförmigen Kolbens 11 angeordnet ist, in einen hier in axialer Richtung linksseitigen Steuerraum 20a und rechtsseitigen Steuerraum 20b unterteilt, die beide wiederum koaxial und ringförmig den Innenkolben 11 umgeben. Hierbei werden durch die axialen Stirnflächen 11a jeweilige Kolbenflächen gebildet, die einem der beiden Steuerräume 20a, der als anschlussseitig zu bezeichnen ist und 20b, der als steckerseitig zu bezeichnen ist, zugeordnet sind.

Hierbei kann, wie auch bei der vorherigen Ausführungsform, der Innenkolben 11 durch eine Druckfeder 21 kraftbeaufschlagt sein in axialer Richtung zum Stecker, so dass dieser drucklos eine maximal nach rechts ausgefahrene axiale Lage einnimmt.

Der Vorsprung 11 b dichtet hier die beiden Steuerräume 20a und 20b gegeneinander dadurch ab, dass in dessen radiale Stirnfläche eine Nut eingearbeitet ist, die einen Dichtring trägt, der den Vorsprung 11 b gegenüber der Innenwandung 4b des Muffengehäuses 4 dichtet.

Bei der hier beschriebenen Ausführungsform liegt die Druckhülse 13 koaxial und gedichtet in dem Innenkolben 11 und steht ihrerseits unter einer axialen Kraftbelastung in Richtung zum Stecker durch eine Druckfeder 22. Durch den Anschluß 14 wird demnach Hydraulikfluid durch den hohlen Innenkolben 11 direkt in das Innere der Druckhülse 13 geleitet.

In gleicher Weise wie auch bei der vorherigen Ausführungsform wird durch das Einstecken eines Steckers 1 die Gesamtheit aus Haltehülse 16, Druckhülse 13, Muffenstößel 12 und Innenkolben 11 axial in das Muffengehäuse 4 hineinverschoben, wodurch sich das Volumen des Steuerraums 20a, der zum Anschluss 14 weist, verringert wird. Durch einen Fluidanschluss 20c in diesem Steuerraum 20a kann das dabei verdrängte Fluid aus dem Steuerraum 20a entweichen und beispielsweise einer hydraulischen Speicherschaltung zugeführt werden oder aber auch in einen Tank des Hydrauliksystems oder auf sonstige Weise abgeführt werden.

Die Volumenvergrößerung des steckerseitigen Steuerraums 20b erzeugt einen Unterdruck, zu dessen Ausgleich der Steuerraum 20b über einen Anschluss 20d und eine interne oder externe Leitung 20e mit dem inneren Volumen der Muffe, insbesondere im Bereich des Anschlusses 14, verbunden ist, so dass aus diesem Volumen das durch die Bewegung verdrängte Volumen in den Steuerraum 20b überströmen kann, so dass sich durch das Einstecken des Hydraulikkupplungssteckers in die Muffe keine geänderten Druckverhältnisse im Inneren der Muffe ergeben.

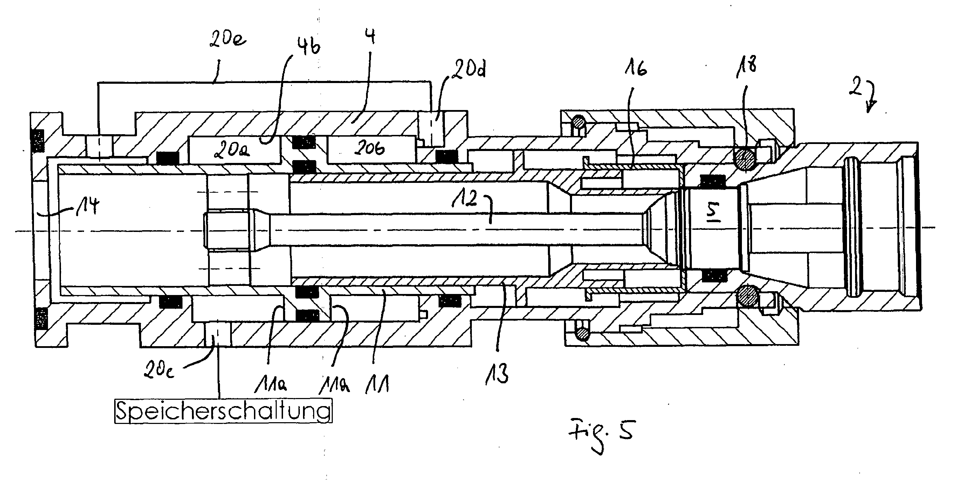

Nach dem Einsteckvorgang, der in der Figur 5 gezeigt ist, wird der Steuerraum 20a durch den Anschluss 20c mit Hydraulikfluid beaufschlagt, so dass durch die Kraftbelastung der ringförmigen Kolbenfläche 11a des Innenkolbens 11 dieser zusammen mit dem Muffenstößel 12 und der Druckhülse 13 in Richtung zum Stecker verschoben wird und durch den Muffenstößel 12 der Steckerstößel 5, wie zuvor beschrieben, axial in das Innere des Steckers 2 verschoben wird und diesen öffnet.

Auf dem Verschiebeweg gelangt gleichzeitig wiederum die Druckhülse 13 in einer Anschlagsposition mit der Haltehülse 16 am Anschlag 13b, so dass ab dieser Position die Druckhülse 13 axial festgelegt ist und sich nur noch der Muffenstößel 12 weiter in Richtung zum Stecker 2 bewegt und somit auch den Fluiddurchgang zwischen Druckhülse 13 und Muffenstößel 12 frei gibt.

Das hier in den Steuerraum 20a zur Verschiebung von Innenkolben 11, Muffenstößel 12 und Druckhülse 13 eingeführte Hydraulikfluid kann beispielsweise einer Hydraulikpumpe entnommen werden, die auch zur Förderung des Fluids dient, welches durch Muffe 1 und Stecker 2 gefördert werden soll. Ebenso besteht die Möglichkeit, dieses Fluid einem Druckspeicher zu entnehmen, der durch Hydraulikfluid beladen ist unter einem vorgegebenen Druck, welcher höher ist als der Innendruck des Steuerraums bzw. bevorzugt der Innendruck der Muffe.

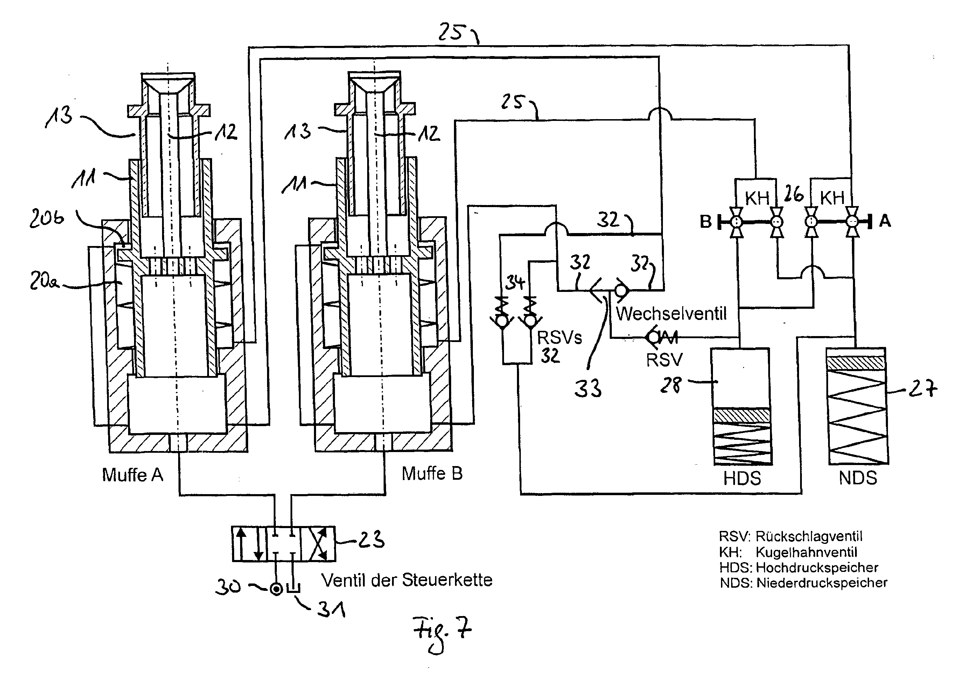

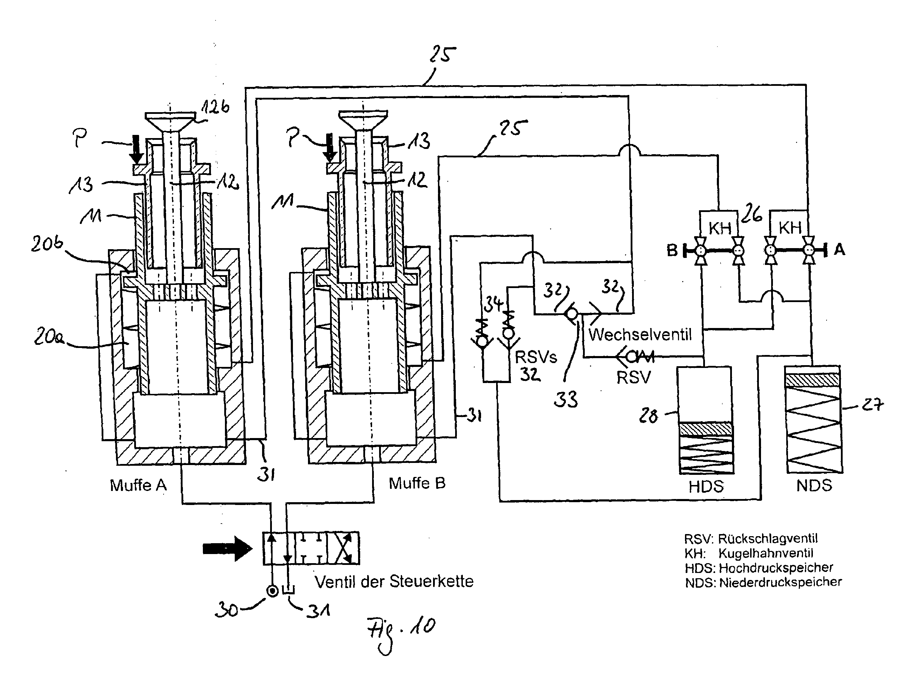

Mit Bezug auf die Figuren 4 - 6 zeigen die Figuren 7 bis 10 eine hydraulische Verschaltung einer Muffenanordnung, umfassend zwei erfindungsgemäße Muffen. Hier ist in einer Ursprungsstellung, die die Figur 7 darstellt, eine Ruheposition des hydraulischen Versorgungssystems dargestellt, in welcher das Ventil 23 der Steuerkette für beide Muffen geschlossen ist, so dass die Innenvolumina der Muffen unter einem beliebigen Druck stehen. Die Schaltung kann für die Muffe aus Fig. 1-3 entsprechend genutzt werden.

Beide Muffen sind in der Figur 7 in einem ungekuppelten Zustand dargestellt, bei denen Innenkolben 11, Muffenstößel 12 und Druckhülse 13 maximal in Richtung zum Stecker axial verlagert sind, so dass diese Muffen geschlossen sind. Der anschlussseitige Steuerraum 20a weist hier maximales Volumen auf, hingegen der steckerseitige Steuerraum 20b minimales Volumen.

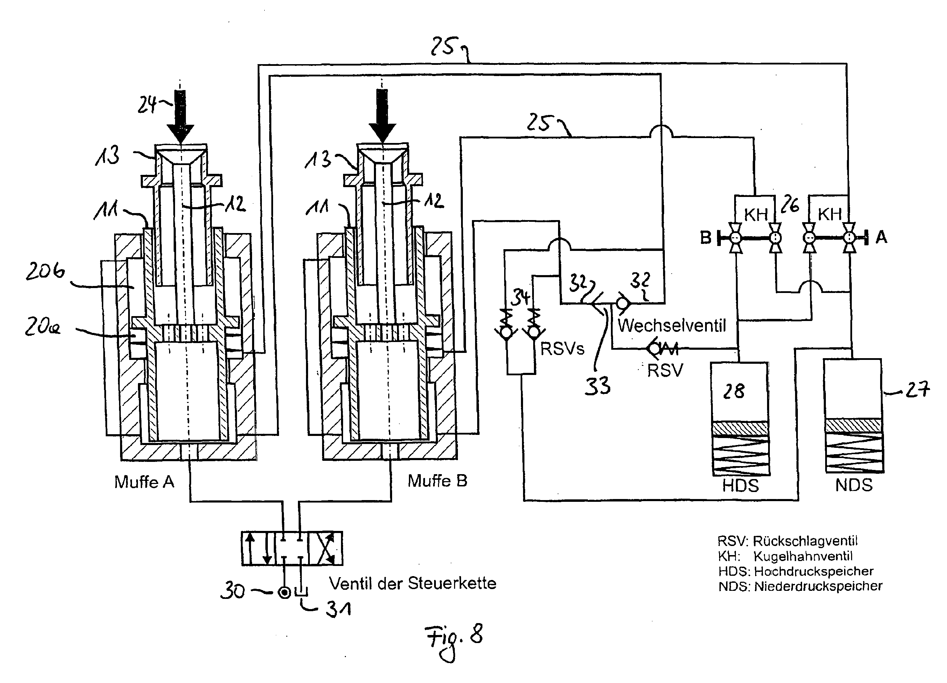

Die Figur 8 zeigt nun symbolisiert durch die Pfeile 24 den Einsteckvorgang, bei dem ein hier nicht weiter dargestellter Stecker in die Muffe eingeführt wird und zunächst die Gesamtheit aus hier nicht dargestellter Hülse, Muffenstößel 12, Druckhülse 13 und Innenkolben 11 in Richtung zur Anschlussseite axial verlagert, wodurch das Volumen des anschlussseitigen Steuerraums 20a verringert wird. Das bei der Volumenverkleinerung verdrängte Fluid wird durch die Leitung 25 aus den Steuerräumen 20a beider Muffen über eine Umschaltventilanordnung 26 in einen Niederdruckspeicher 27 gedrückt, der hierdurch mit Fluid aufgeladen wird und somit sein Fluidvolumen vergrößert.

Eine bedienende Person muss demnach bei einer solchen erfindungsgemäßen Anordnung aus zwei Muffen mit der hier dargestellten hydraulischen Verschaltung lediglich die Umschaltventilanordnung 26 in eine Stellung bringen, in welcher der Niederdruckspeicher mit den Steuerräumen 20a beider Muffen verbunden ist, um das Einstecken eines Steckers zu ermöglichen, was mit normaler Handkraft erfolgen kann, da lediglich mit der Handkraft das Fluid aus dem Volumen des Steuerraums 20a verdrängt werden muss.

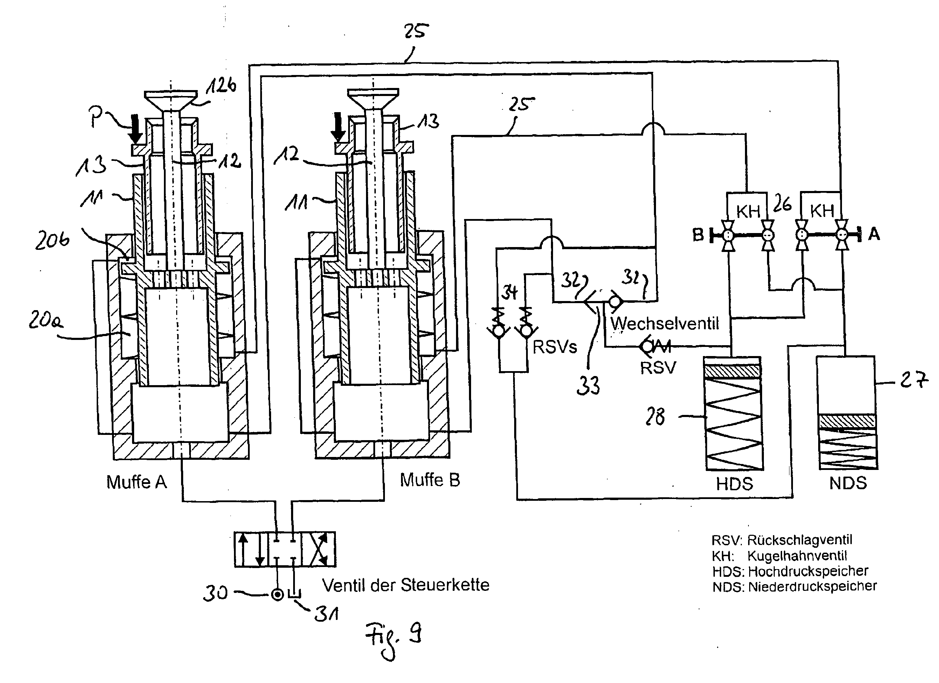

Figur 9 zeigt die Situation nach dem Einstecken und Verriegeln des hier nicht dargestellten Steckers bei der nun durch das unter Druck stehende Fluid eines Hochdruckspeichers 28 nach Umschaltung der Ventilanordnung 26 das unter Hochdruck stehende Fluid des Hochdruckspeichers 28 über die Leitungen 25 in den Steuerraum 20a beider Muffen zugeführt wird, so dass durch die Kraftbeaufschlagung nunmehr wie zuvor beschrieben die Gesamtheit aus Innenkolben 11 und Druckhülse 13 sowie dem Muffenstößel 12 in Richtung zum Stecker bewegt wird, bis dass symbolisiert durch den Pfeil P die Druckhülse 13 an einen Anschlag entweder am Muffengehäuse oder an der Haltehülse 16 anliegt und nicht mehr axial weiter bewegt werden kann. Die axiale Weiterbewegung des Innenkolbens zusammen mit dem Muffenstößel 12 bewirkt sodann, dass sich dessen Dichtfläche 12b von der Druckhülse 13 abhebt und den Fluiddurchgang zum Stecker frei gibt.

In dieser Situation ist der Hochdruckspeicher 28 aufgrund der Abgabe seines Fluids in den Steuerraum 20a vollständig entladen, wohingegen der Niederdruckspeicher 27 aufgrund der vorherigen Aufnahme des Fluids aus diesem Steuerraum vollständig aufgeladen ist.

Es muss daher eine Umladung beider Druckspeicher stattfinden, damit diese für einen folgenden zukünftigen Kupplungsvorgang wiederum in gleicher funktionaler Weise zur Verfügung stehen. Erfindungsgemäß wird auch dies mit einer hydraulischen Verschaltung der in den Figuren 7 - 10 dargestellten Hydraulik erzielt.

Wird nämlich nun mit dem Ventil 23 der Steuerkette eine hydraulische Versorgung eines Arbeitsgerätes durch die beiden Muffen hergestellt, wofür in diesem Beispiel die Muffe A mit der Hochdruckseite einer Fluidquelle 30 verbunden wird und die Muffe B mit der Niederdruckseite, z.B. einem Tank 31, so wird das innere Volumen der Muffe A unter Hochdruck und das innere Volumen der Muffe B unter niedrigem Druck gehalten. Durch die Leitungen 32 werden die Fluiddrücke der inneren Volumina beider Muffen auf eine Wechselventilanordnung 33 aufgeschaltet, die dafür vorgesehen ist, das Fluid der unter einem höheren Druck stehenden Leitung der beiden Leitungen 32 auf den Hochdruckspeicher 28 aufzuschalten, um diesen sodann vollständig aufzuladen. Dabei ist es aufgrund des Wechselventils irrelevant, welche der beiden Muffen A bzw. B unter Hoch- oder Niederdruck betrieben werden. In jedem Fall erfolgt durch die automatische Einstellung des Wechselventils, an dessen Stelle auch zwei Rückschlagventile genutzt werden können ein entsprechendes Aufladen des Hochdruckspeichers.

Durch dieselben Leitungen 32 sind beide Muffen auch über eine Parallelanordnung zweier Rückschlagventile 34 eingangsseitig verbunden, deren gemeinsame Ausgangsseite mit dem Niederdruckspeicher in Verbindung steht, so dass sich dessen Volumen automatisch in das innere Volumen der unter Niederdruck stehenden Muffe, hier der Muffe B, entlädt, so dass auch der Niederdruckspeicher sein bei der Kupplung aufgefülltes Volumen entladen kann und somit für einen zukünftigen Kupplungsvorgang wiederum zur Verfügung steht.

Es ist für die hier beschriebene Ausführung darauf hinzuweisen, dass nicht zwingend für den erfindungsgemäßen Einsatz ein Hoch- und Niederdruckspeicher verwendet werden müssen. Es besteht ebenso die Möglichkeit, das Fluidvolumen aus dem Steuerraum A beim Vorgang des Kuppelns in den Tank der Hydraulikversorgung abzuführen, der unter Niederdruck steht und automatisch bei Anschalten des Hydrauliksystems den hierdurch erzeugten Fluiddruck auf den Steuerraum 20a aufzuschalten und somit gleichzeitig das Öffnen von Muffe und Stecker zu bewirken.

Auch diese Ausführungsform zeigt, dass eine bedienende Person lediglich mit Handkraft nach entsprechender Betätigung der Umschaltventile 26 ein manuelles Kuppeln selbst einer unter Druck stehenden Steckeranordnung mit der erfindungsgemäßen Muffe bewirken kann.

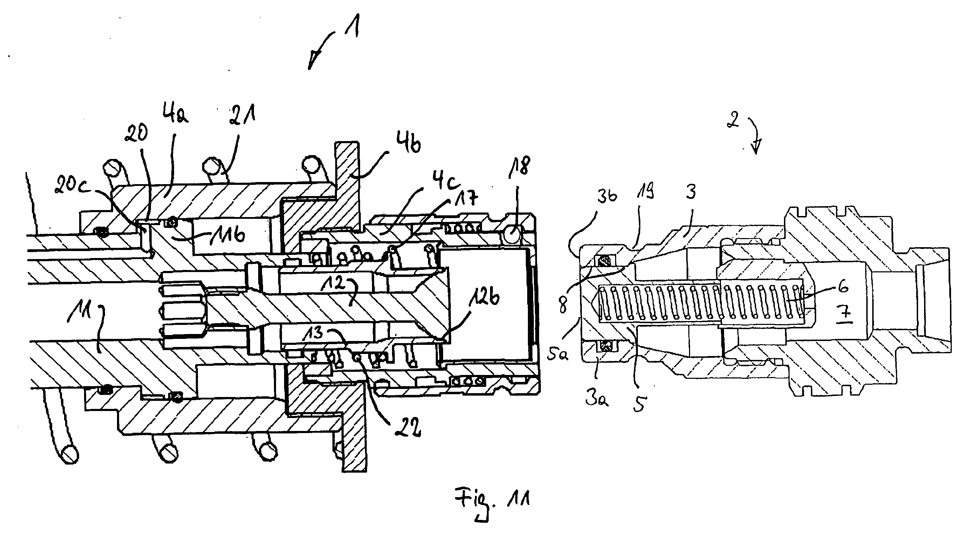

Eine dritte Ausführungsform ist in den Figuren 11 bis 14 dargestellt. Auch hier arbeitet die Hydraulikkupplungsmuffe 1 mit einem Hydraulikkupplungsstecker 2 zusammen, wie er zur Figur 1 bereits beschrieben wurde. Mit den vorherigen Figuren übereinstimmende Bauteile weisen wiederum dieselben Bezugszeichen auf.

Gegenüber den vorherigen Figuren ist hier das Muffengehäuse 4 aus mehreren einzelnen Bauteilen 4a, 4b und 4c aufgebaut, die untereinander verbunden sind.

Der im Muffengehäuse 4 axial verschiebliche Innenkolben 11 ist hier wiederum mit dem Muffenstößel 12 verbunden, wobei der Innenkolben 11 eine hohle Hülse bildet, die innen mit dem Hydraulikfluid beaufschlagt ist, das durch die Muffe 1 gefördert werden soll. Die Fluidverbindung führt hier vom Inneren des Innenkolbens 11 in das Innere der Druckhülse 13, die in der Figur 11 gedichtet am Muffenstößel 12 an dessen Dichtsitz 12b anliegt.

Im Gegensatz zu den Figuren 4 bis 6, bei denen der Fluidanschluss 14 für das zu fördernde Fluid am Muffengehäuse 4 angeordnet ist, hat diese Anordnung den Fluidanschluss - der hier in den Figuren nicht gezeigt ist - am Innenkolben 11, der verschieblich aus dem Muffengehäuse 4 an dessen Anschlussseite herausragt.

Der Innenkolben weist einen radial vorspringenden ringförmigen Vorsprung 11 b auf, der an dessen radialer Stirnseite einen Dichtring trägt, der an einer zylindrischen Innenwandung des Muffengehäuses 4, hier des Teils 4a anliegt. Weiterhin weist die Innenwandung des Muffengehäuses 4, hier des Teils 4a, einen gegenüber dem vorgenannten Dichtring zur Anschlussseite versetzten Dichtring auf, der an der Außenwandung des Innenkolbens 11 gedichtet anliegt. Zwischen Innenkolben 11 und Muffengehäuse 4, hier des Teils 4a, und weiterhin zwischen den beiden vorgenannten Dichtringen wird ein Ringraum 20 gebildet, der wie auch bei den Figuren 4 bis 6 einen Steuerraum darstellt, der durch Hydraulikfluid beaufschlagt ist. Diese Beaufschlagung erfolgt hier durch einen Kanal, der durch den Innenkolben verläuft und im Anschluß 20c in den Ringraum / Steuerraum 20 mündet.

Sofern dieser Steuerraum 20 druckentlastet wird, bewirkt die Druckfeder 21, die hier außen am Muffengehäuse 4 angeordnet ist, dass der Innenkolben 11 in Richtung des hier nicht gezeigten Fluidanschlusses 14 verschoben wird, d.h. hier ins Innere des Muffengehäuses 4. Hierzu ist die Druckfeder 21 steckerseitig am Muffengehäuse 4, hier an dessen Teil 4b abgestützt und anschlussseitig am aus dem Muffengehäuse herausragenden Innenkolben 11, was nicht gezeigt ist.

Durch die Verschiebung des Innenkolbens 11 zur Anschlussseite hin wird die Gesamtheit der Anordnung aus Innenkolben 11, Muffenstößel 12 und Druckhülse 13 verschoben. Dabei bleibt der Fluiddurchgang zwischen Druckhülse 13 und Muffenstößel 12 geschlossen, da auf die Druckhülse 13 in Richtung zum Dichtsitz 12b des Muffenstößels 12 eine schließende Kraft wirkt, die durch die Druckfeder 22 aufgebracht wird, die zwischen Druckhülse 13 und Innenkolben 11 wirkt.

Durch diese Verschiebung nimmt die Muffe 1 die Stellung ein, wie sie in der Figur 11 gezeigt ist, wobei die Haltehülse 16 in ihrer ursprünglichen Lage verbleibt und nicht mitverschoben wurde. Dies wird durch die Kraftbelastung in Richtung zum Stecker bewirkt, die durch eine Druckfeder 17 hervorgerufen wird, welche einseitig an der Haltehülse 17 anliegt und an der anderen Seite am Muffengehäuse 4 bzw. einem damit fest verbundenen Teil.

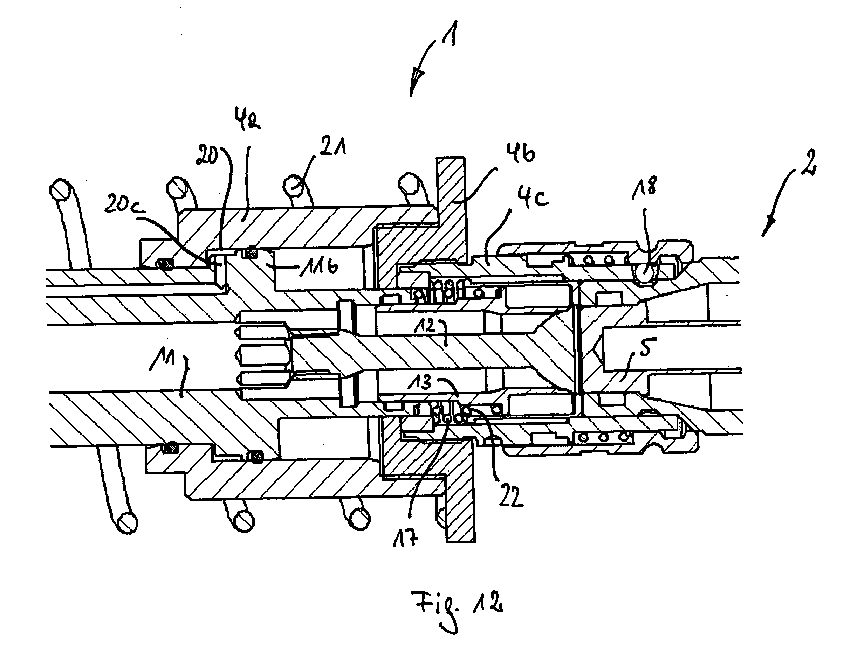

Wie Figur 12 zeigt, kann nun der Hydraulikkupplungsstecker 2 in die Muffe 1 eingeführt werden, wofür lediglich die Haltehülse 16 gegen die wirkende Federkraft der Feder 17 in das Innere des Muffengehäuses 4 verschoben werden muss, was durch Handkraft erfolgen kann. Das Einführen erfolgt so weit, bis dass die Stirnseiten 12a/5a von Muffenstößel 12 und Steckerstößel 5 voreinander / aneinander liegen.

In dieser Position kann auch die Verriegelung des Steckers 2 an der Muffe 1 erfolgen, bei der die Kugeln 18 in die Nut 19 eingreifen und die Schiebhülse über diese Kugeln axial herüberfährt, um ein radiales Zurückweichen zu verhindern.

Eine eventuell bestehende Druckbeaufschlagung des Inneren des Innenkolbens 11 wirkt sich in keiner Weise auf eine Verschiebung der beschriebenen Elemente und eine Dichtigkeit des Fluiddurchgang aus, da durch eine solche Druckbeaufschlagung auf die Druckhülse 13 nur radiale Kräfte ausgeübt werden und diese somit immer in ihrer Lager verbleibt, insbesondere also nicht axial verschoben wird. Der vorbeschriebene Kuppelvorgang kann also durchgeführt werden, wenn sowohl Stecker 2 als auch Muffe 1 unter Druck stehen.
Wird nun der Steuerraum 20 unter Druck gesetzt durch Fluidzuführung zum Anschluß 20c, so b
ewirken die axial auf den Ringvorsprung 11 b wirkenden Kräfte eine Verschiebung des Innenkolben 11 zusammen mit Druckhülse 12 und Muffenstößel 12 in Richtung zum verriegelten Stecker 2, wobei die vergleichsweise geringeren Kräfte der Feder 21 überwunden werden.

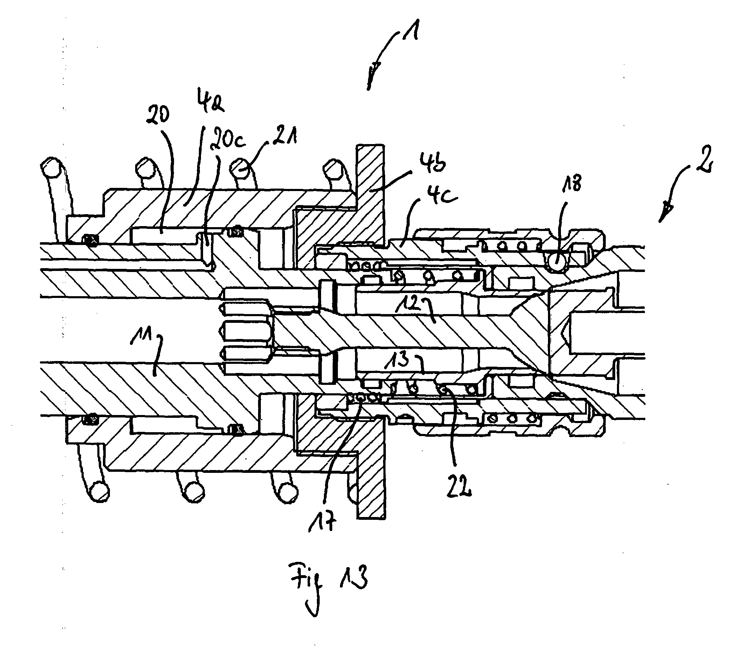

Dabei fahren das steckerseitige Ende der Drückhülse 13 und des Muffenstößels 12 zunächst weiterhin gedichtet in den Stecker ein und drücken dessen Steckerstößel 5 in dessen Inneres zurück, bis dass die Druckhülse 13 an einem Anschlag zur Anlage kommt, der hier durch die vordere innere Stirnseite der Haltehülse gebildet wird, in welche die Druckhülse koaxial eingefahren ist. Die vordere Außenwandung der Druckhülse 13 dichtet dabei gegenüber dem Stecker. Diese Situation zeigt die Figur 13.

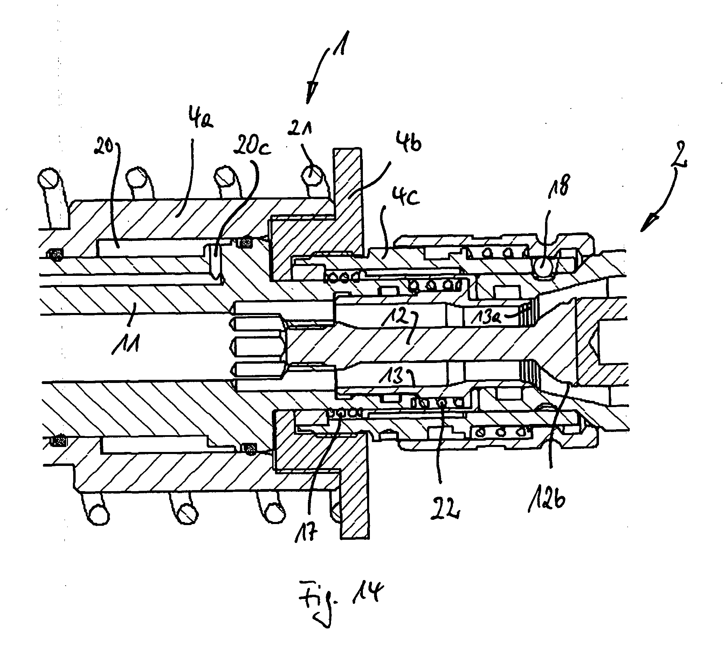

Die Figur 14 hingegen zeigt das Weiterfahren des Innenkolbens 11 zusammen mit dem Muffenstößel 12 bei sodann lagestabiler Druckhülse 13, wodurch sich die vordere Stirnfläche 13a der Druckhülse 13 vom Dichtsitz 12b des Muffenstößels 12 abhebt und den Fluiddurchgang der Muffe 1 freigibt. Dabei ist gleichzeitig der Steckerstößel 5 so weit in den Stecker 2 hineingedrückt worden, dass auch dieser den steckerseitigen Fluiddurchgang öffnet, so dass Fluid durch Muffe 1 und Stecker 2 fließen kann.

Auch diese Ausführung hat somit den Vorteil, dass erst dann der Fluiddurchgang geöffnet wird, wenn eine vorherige Verriegelung stattgefunden hat und dass weiterhin diese Verriegelung mit Handkraft erfolgen kann und die Öffnung von Stecker und Muffe automatisch durch hydraulisch aufgebrachte Kräfte bewirkt wird.

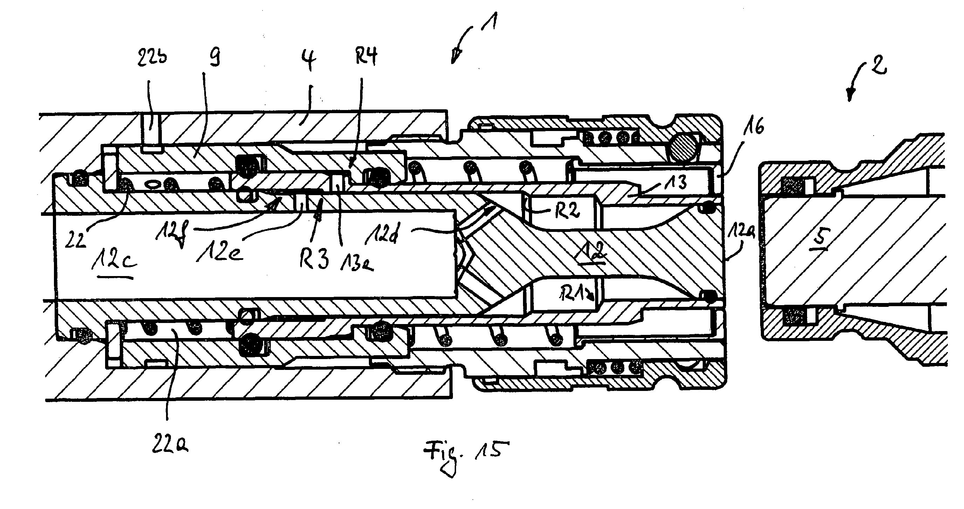

Die Figuren 15 bis 17 beschreiben eine weitere Ausführungsform, bei welcher hingegen der Muffenstößel 12 in der Hydraulikkupplungsmuffe 1 ortsfest ist und nur die Druckhülse 13 auf diesem axial verschieblich und koaxial angeordnet ist. Hier wird die Druckentlastung bei der Muffe dadurch erreicht, dass keine in axialer Richtung effektiv wirkenden Kräfte vorhanden sind.

Erreicht wird die dadurch, dass der Muffenstößel 12 einen inneren koaxialen Kanal aufweist 12c aufweist, der in Öffnungen 12d mündet, die auf der Außenfläche des Muffenstößel 12 angeordnet sind und durch die somit das Innere der Druckhülse 13 mit Hydraulikfluid beaufschlagt ist.
Durch das Fluid wird auf alle Innenwandungsbereiche der Druckhülse 13 eine Kraft ausgeübt, wobei Druck auf achsparallelverlaufende Wände nur radiale Kräfte erzeugt, die dem Kuppeln nicht entgegen wirken können.

Alle Flächenbereiche hingegen, die in axialer Richtung durch das Hydraulikfluid druckbeaufschlagt sind, erzeugen auch axiale Kräfte. Hier ist die Druckhülse 13 innen an drei Stufen im Durchmesser in Richtung zur Stirnfläche 12a des Muffenstößels 12 verjüngend ausgebildet, wodurch sich Ringflächen R1, R2 und R3 ausbilden. Diese Ringflächen erzeugen axiale Kräfte, die der Verschiebung der Druckhülse aus dem Dichtsitz des Muffenstößels im Bereich von dessen Stirnfläche 12a entgegen wirken. Hierbei ist es vorteilhaft, wenn der Dichtsitz ausschließlich radial dichtend ist.

Erfindungsgemäß ist es hier vorgesehen, die Summe dieser Kräfte zu kompensieren, wofür die Druckhülse 13 eine weitere hier außen angeordnete Ringfläche R4 aufweist, die ebenfalls aus dem Inneren der Druckhülse mit Hydraulikfluid beaufschlagt ist und eine entgegen gerichtete Kraft erzeugt. Dort verjüngt sich der Außendurchmesser der Druckhülse 13 in Richtung zur Stirnfläche 12a des Muffenstößels 12.

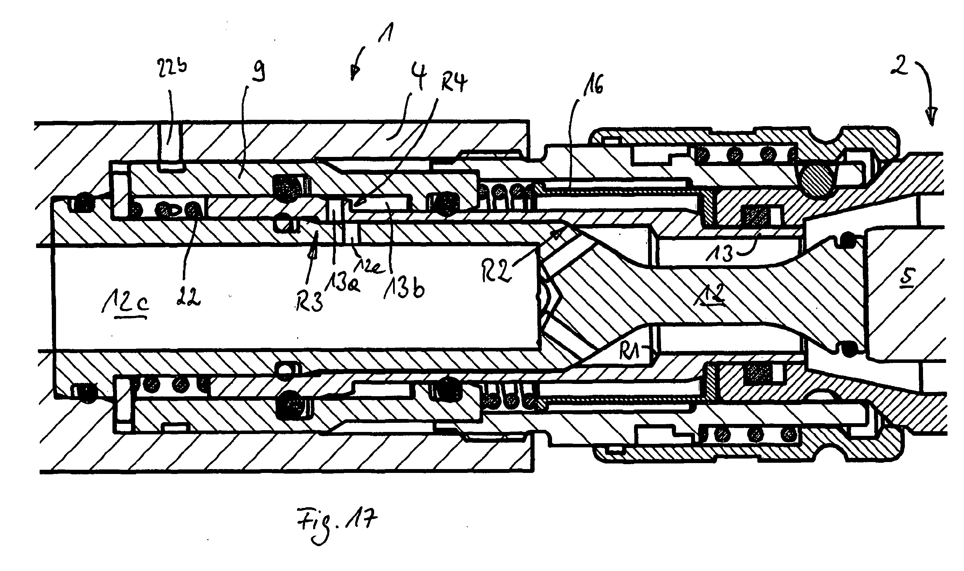

Diese Ringfläche R4 ist hier durch Hydraulikfluid beaufschlagt, dass durch einen Kanal 13a in der Wandung der Druckhülse 13 aus deren Innerem in einen Ringraum 13b eintreten kann, der am besten in der Figur 17 erkennbar ist. Dieser Ringraum ist hier zwischen der Druckhülse 13 und einem Einsatz 9 in dem Muffengehäuse 4 ausgebildet. Axial beidseitig zum Kanal13a in der Wandung der Druckhülse 13 ist die Druckhülse 13 gedichtet an der Innenwand des Einsatzes 9 geführt, so dass zwischen den Dichtungen und den Wandungen von Druckhülse 13 und Einsatz 9 der Ringraum 13b gebildet ist.

Da bei der hier gezeigten Ausführung die Innenwandung der Druckhülse an der Außenwandung des Muffenstößels axial weitläufig anliegt, ist es hier vorgesehen zur besseren Fluidversorgung in der Wandung des Muffenstößels zwischen dessen inneren Kanal 12c und dessen Außenseite einen radialen Kanal 12e vorzusehen, durch den das Hydraulikfluid zunächst in einen Ringraum 12f übertreten kann, um so durch den Kanal 13a in den Ringraum 13b zu gelangen.

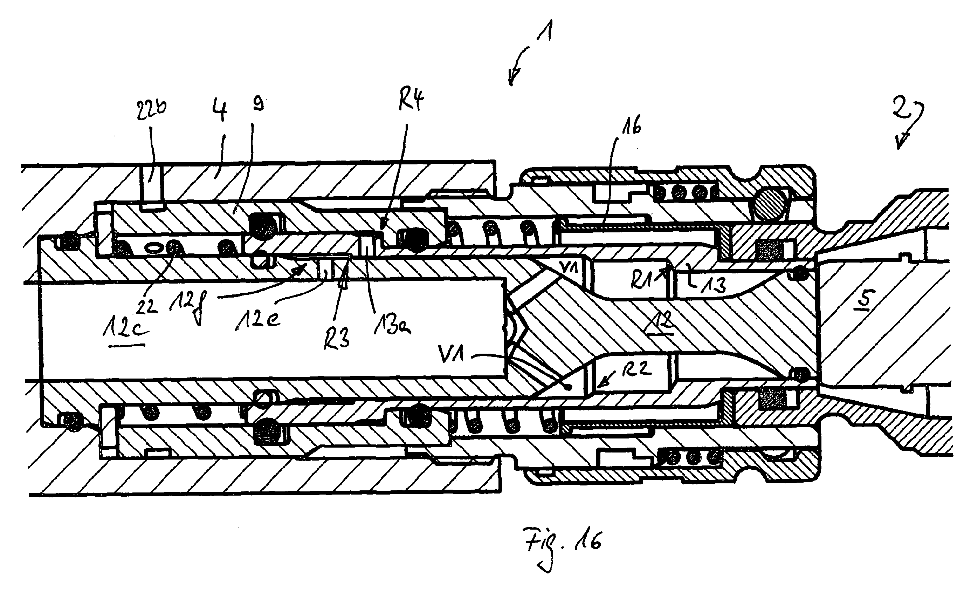

Der Ringraum 13b ist hier so dimensioniert, dass er als Reservoir für Fluid dient, das bei der Druckhülsenverschiebung aus deren inneren Volumen verdrängt wird. So zeigt der Vergleich der Figuren 16 und 17, dass aus dem Inneren der Druckhülse der Volumenanteil V1, der in Figur 16 noch zu erkennen ist, durch die Verschiebung verdrängt wurde. Diesem Volumen entspricht das Volumen des Ringraumes 13b, so dass beim Verschieben eine interne Umverlagerung des Fluids stattgefunden hat.

Das Einschieben des in Figur 15 separat gezeigten Steckers 2 erkennt man in der Figur 16, wobei zunächst nur die Haltehülse 16 axial in das Muffengehäuse 4 verlagert wird und durch den feststehenden Muffenstößel 12 der Steckerstößel 5 in das Steckerinnere zurückgedrückt wird und dessen Fluiddurchgang freigibt.

Nachdem die Haltehülse beim Einschieben an einem Anschlag der Druckhülse 13 zu liegen kommt, wird diese mitverschoben und öffnet, wie Figur 17 zeigt den Fluiddurchgang durch die Muffen in dem Augenblick der Verriegelung des Steckers an der Muffe wie es zuvor mehrfach beschrieben wurde.

Die Figuren 15 bis 17 zeigen weiterhin, dass die Druckhülse 13 nur gegen eine Kraft axial verschoben werden muss, die durch die Druckfeder 22 aufgebracht wird, die in einem Ringraum 22a zwischen dem Einsatz 9 und dem Muffenstößel 12 gebildet ist. Auch dieser Ringraum 22a kann durch Fluid druckbeaufschlagbar sein, insbesondere nämlich über den Kanal 22b, der durch das Muffengehäuse und den Einsatz 9 in den Ringraum 22a führt. So kann durch Druckbeaufschlagung die Muffe auf einfache Weise das Schließen der Muffe unterstützt werden, da dieser Druck auf die anschlussseitige ringförmige Stirnfläche der Druckhülse 13 wirkt und diese in den Dichtsitz am Muffenstößel schiebt. In jedem Fall sorgt hierfür jedoch auch die Druckfeder 22, wenn der Stecker entriegelt und aus der Muffe gezogen wird.

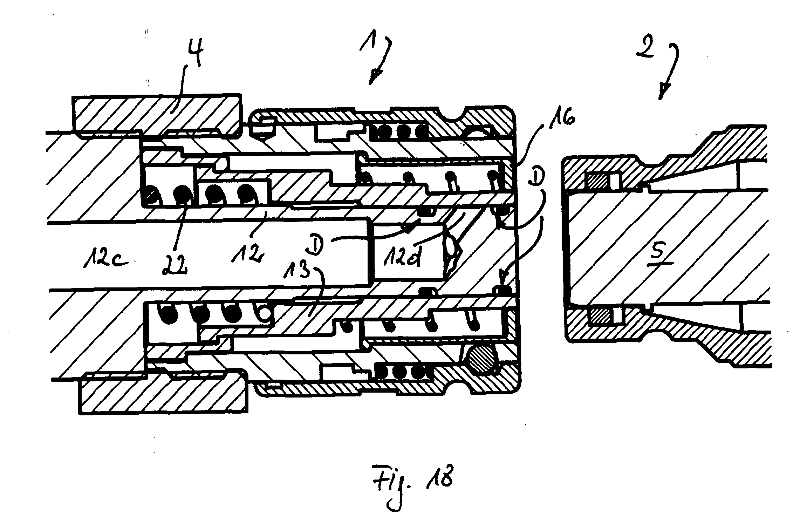

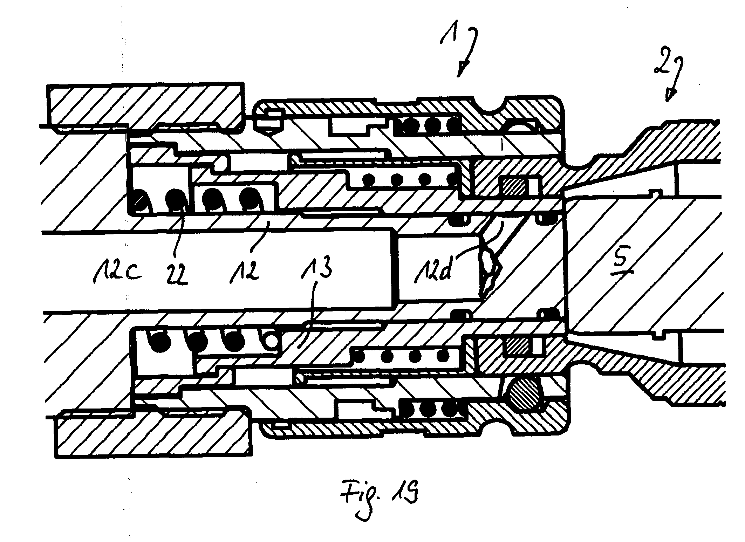

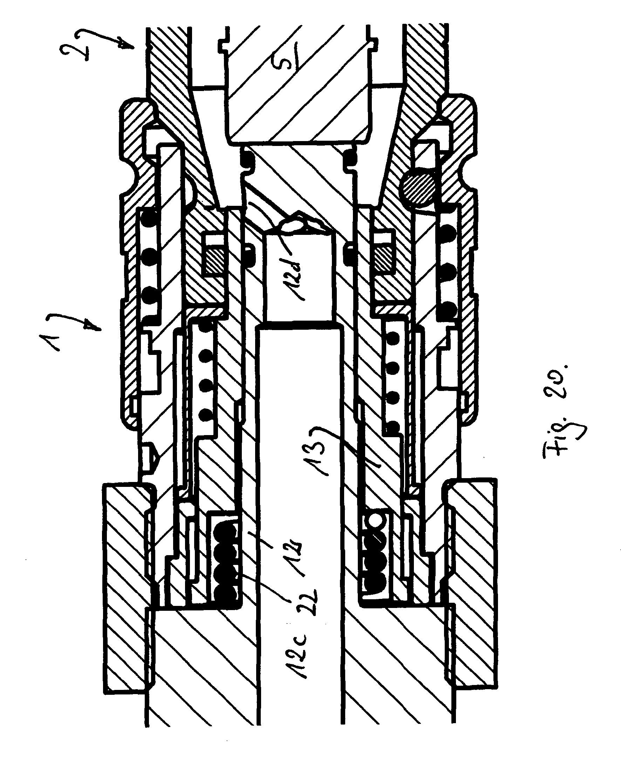

Die Figuren 18 bis 20 zeigen eine letzte Ausführung, bei der die Dichtungen D axial vor und hinter der Öffnung 12d, durch die hindurch die Druckhülse13 von innen druckbeaufschlagt ist, auf gleichem Dichtungsdurchmesser liegen. Die Innenwandung der Druckhülse 13 und die Außenwandung des Muffenstößels 12 haben im Bereich zwischen den Dichtungen D gleiche Durchmesser und sind zylindrisch, so dass die Öffnung 12d ohne Abstand der Innenwand der Druckhülse 13 radial gegenüberliegt. Somit kann das anstehende Hydraulikfluid hier nur eine radiale Kraft auf die Druckhülse 13 ausüben. In dem Bereich, wo das Hydraulikfluid zwischen den Dichtungen D auf die Druckhülse wirken kann, weist diese keine Flächenbereiche auf, die eine axiale Kraft erzeugen könnten.

Hier ist die Druckhülse wiederum nur alleinig durch die Druckfeder 22 kraftbeaufschlagt, die zwischen Druckhülse und Muffenstößel 12 oder Gehäuse 4 wirkt und wird durch diese Feder über den Dichtungen 22 gehalten, bis dass ein Stecker 2 in die Muffe 1 eingeführt wird, wie es wiederum die Figuren 18 bis 20 in zeitlicher Folge zeigen.

Wie auch bei der vorherigen Ausführung ist hier die Dichtung zwischen Druckhülse 13 und Muffenstößel 12 rein radial ausgeführt, d.h. die Druckhülse 13 liegt koaxial über dem Muffenstößel wobei die Stirnflächen beider Elemente in einer Ebene liegen, insbesondere zusammen mit Haltehülse 16 und Gehäusestirnfläche.

## Patentansprüche

1. Hydraulikkupplungsmuffe (1) mit einem Muffengehäuse (4), insbesondere einem hülsenförmigen Muffengehäuse (4), in welchem achsparallel, insbesondere koaxial ein Muffenstößel (12), eine diesen Muffenstößel (12) achsparallel, insbesondere koaxial umgebende axial bewegliche Druckhülse (13) und eine die Druckhülse (13) achsparallel, insbesondere koaxial umgebende axial bewegliche Haltehülse (16) angeordnet ist, deren äußere Mantelfläche im Muffengehäuse (4) angeordnete Sicherungselemente (18) in radialer Richtung unterstützen oder freigeben und deren insbesondere ringförmige Stirnfläche (16a) im ungekuppelten Zustand mit den Stirnflächen (12a) des Muffenstößels (12) und des Muffengehäuses (4) zumindest im Wesentlichen in einer Ebene liegt, und die Druckhülse von innen mit einem durch die Muffe zu fordernden Hydraulikfluid zumindest im Wesentlichen axial kraftfrei beaufschlagt ist, **dadurch gekennzeichnet, dass** der Muffenstößel (12) einen inneren durch das zu fördernde Hydraulikfluid beaufschlagten Kanal aufweist, der sich von einem Hydraulikfluidanschluß in Richtung zur Stirnfläche (12a) des Muffenstößels erstreckt und axial vor dessen Stirnfläche (12a) in wenigstens eine Öffnung auf der Außenfläche des Muffenstößels (12) mündet, durch welche die Druckhülse von innen druckbeaufschlagt ist, wobei axial vor und hinter der wenigstens einen Öffnung die Druckhülse (13) und der Muffenstößel (12) gedichtet und verschieblich aneinander anliegen.

2. Muffe nach Anspruch 1, **dadurch gekennzeichnet, dass** die Druckhülse (13) mittels einer Druckfeder in Richtung zur Stirnfläche (12a) des Muffenstößels (12) kraftbeaufschlagt ist.

3. Muffe nach Anspruch 1 oder 2, **dadurch gekennzeichnet, dass** axial vor und hinter der wenigstens einen Öffnung die Druckhülse (13) und der Muffenstößel (12) auf unterschiedlichen Dichtungsdurchmessern gedichtet aneinander anliegen, wobei an der Druckhülse (13) durch zu förderndes Hydraulikfluid beaufschlagte Flächen vorgesehen sind, von denen wenigstens eine Fläche axial auf die Druckhülse in Richtung Hydraulikfluidanschluß wirkende Kräfte erzeugt und von denen wenigstens eine Fläche axial auf die Druckhülse in Richtung Muffenstößelstirnfläche (12a) wirkende Kräfte erzeugt, wobei sich die Kräfte in der Summe vektoriell zu Null addieren oder zu einer verbleibenden in Richtung auf die Stirnfläche (12a) gerichteten Kraft addieren, die durch Handkraft bei einem Kupplungsvorgang überwindbar ist.

4. Muffe nach Anspruch einem der vorherigen Ansprüche, **dadurch gekennzeichnet, dass** wenigstens eine durch zu förderndes Hydraulikfluid beaufschlagte Fläche der Druckhülse (13), die eine axial zum Hydraulikfluidanschluß gerichtete Kraft erzeugt, an der äußeren Wandung der Druckhülse (13) vorgesehen ist, die durch einen Verbindungskanal in der Wandung der Druckhülse (13) von deren Inneren mit Hydraulikfluid beaufschlagt ist.

5. Muffe nach Anspruch 4, **dadurch gekennzeichnet, dass** der Verbindungskanal einen äußeren an die Druckhülse (13) außen angrenzenden Ringraum mit dem Inneren der Druckhülse und/oder dem Kanal des Muffenstößels verbindet, wobei der äußere Ringraum angeordnet ist zwischen Druckhülse (13) und Muffengehäuse (4) oder zwischen Druckhülse (13) und einem im Muffengehäuse (4) angeordneten Einsatz (9).

6. Muffe nach Anspruch 5, **dadurch gekennzeichnet, dass** der äußere Ringraum ein Reservoir bildet, das aus dem Inneren der Druckhülse bei einer Verschiebung verlagertes Hydraulikfluid aufnimmt, insbesondere wobei die beim Verschieben erzeugte Volumenvergrößerung des Ringraumes der Volumenverkleinerung des inneren Volumens der Druckhülse (13) entspricht.

7. Muffe nach Anspruch einem der vorherigen Ansprüche, **dadurch gekennzeichnet, dass** axial vor und hinter der wenigstens einen Öffnung die Druckhülse (13) und der Muffenstößel (12) auf gleichen Dichtungsdurchmessern gedichtet aneinander anliegen.

8. Muffe nach Anspruch 7, **dadurch gekennzeichnet, dass** an einem zur Stirnfläche (12a) nahen Bereich der Muffenstößel außen und die Druckhülse innen zylindrisch ausgebildet sind, insbesondere mit im Wesentlichen demselben Durchmesser, so dass die wenigstens eine Öffnung der Innenwandung der Druckhülse (12) ohne Abstand oder zumindest ohne wesentlichen Abstand radial gegenüberliegt.

## Claims

1. Hydraulic coupling bush (1) with a bush housing (4), in particular a sleeve-shaped bush housing (4), in which are arranged axially parallel, in particular coaxially, a bush plunger (12), an axially movable thrust sleeve (13) surrounding this bush plunger (12) axially parallel, in particular coaxially, and an axially movable holding sleeve (16) surrounding the thrust sleeve (13) axially parallel, in particular coaxially, and the outer surface area of which radially supports or releases securing element (18) arranged in the bush housing (4) and the, in particular, ringshaped end face (16a) of which lies, in the uncoupled state, at least essentially in one plane with the end faces (12a) of the bush plunger (12) and of the bush housing (4), the thrust sleeve being acted upon from inside, free of force at least essentially axially, by a hydraulic fluid to be conveyed through the bush, **characterized in that** the bush plunger (12) has an inner duct which is acted upon by the hydraulic fluid to be conveyed and which extends from a hydraulic fluid connection in the direction towards the end face (12a) of the bush plunger and issues axially, in front of the end face (12a) of the latter, to at least one orifice on the outer face of the bush plunger (12), through which orifice the thrust sleeve is acted upon with pressure from inside, the thrust sleeve (13) and the bush plunger (12) bearing one against the other in a leak-tight manner and displaceably axially in front of and behind the at least one orifice.

2. Bush according to Claim 1, **characterized in that** the thrust sleeve (13) is acted upon with force in the direction towards the end face (12a) of the bush plunger (12) by means of a compression spring.

3. Bush according to Claim 1 or 2, **characterized in that** the thrust sleeve (13) and the bush plunger (12) bear one against the other, leak-tight on different sealing diameters, axially in front of and behind the at least one orifice, there being provided on the thrust sleeve (13) faces which are acted upon by hydraulic fluid to be conveyed and of which at least one face generates forces acting axially upon the thrust sleeve in the direction of the hydraulic fluid connection and of which at least one face generates forces acting axially upon the thrust sleeve in the direction of the bush plunger end face (12a), the forces adding up in sum vectorially to zero or adding up to a remaining force which is directed in the direction towards the end face (12a) and which can be overcome by manual force during a coupling operation.

4. Bush according to one of the preceding claims, **characterized in that** at least one face of the thrust sleeve (13), which face is acted upon by hydraulic fluid to be conveyed and generates a force directed axially towards the hydraulic fluid connection, is provided on the outer wall of the thrust sleeve (13) which is acted upon with hydraulic fluid from its inside through a connecting duct in the wall of the thrust sleeve (13).

5. Bush according to Claim 4, **characterized in that** the connecting duct connects an outer annular space adjacent to the thrust sleeve (13) on the outside to the interior of the thrust sleeve and/or to the duct of the bush plunger, the outer annular space being arranged between the thrust sleeve (13) and bush housing (4) or between the thrust sleeve (13) and an insert (9) arranged in the bush housing (4).

6. Bush according to Claim 5, **characterized in that** the outer annular space forms a reservoir which receives hydraulic fluid shifted out of the interior of the thrust sleeve during displacement, in particular the increase in volume of the annular space generated during displacement corresponding to the reduction in volume of the inner volume of the thrust sleeve (13).

7. Bush according to one of the preceding claims, **characterized in that** the thrust sleeve (13) and the bush plunger (12) bear one against the other, leak-tight on identical sealing diameters, axially in front of and behind the at least one orifice.

8. Bush according to Claim 7, **characterized in that**, on a region near the end face (12a), the bush plunger is formed cylindrically on the outside and the thrust sleeve is formed cylindrically on the inside, in particular with essentially the same diameter, so that the at least one orifice lies radially opposite the inner wall of the thrust sleeve (12) without clearance or at least without appreciable clearance.

## Revendications

1. Manchon d'accouplement hydraulique (1) doté d'un carter de manchon (4), notamment d'un carter de manchon (4) en forme de fourreau dans lequel un poussoir de manchon (12) est disposé parallèlement à l'axe, notamment dans le plan coaxial, dans lequel un fourreau de compression (13) mobile dans le plan axial entourant ce poussoir de manchon (12) est disposé parallèlement à l'axe, notamment dans le plan coaxial, et dans lequel un fourreau de maintien (16) mobile dans le plan axial entourant le fourreau de compression (13) est disposé parallèlement à l'axe, notamment dans le plan coaxial, dont les éléments de fixation (18) disposés dans le carter de manchon (4) soutiennent ou libèrent la surface d'enveloppe extérieure dans la direction radiale et dont la surface avant (16a), notamment de forme annulaire, repose au moins pour l'essentiel dans un plan, à l'état non embrayé, avec les surfaces avant (12a) du poussoir de manchon (12) et du carter de manchon (4) et dans lequel le fourreau de compression est alimenté sans application de force, au moins pour l'essentiel dans le plan axial, depuis l'intérieur, avec un fluide hydraulique à transporter à travers le manchon, **caractérisé en ce que** le poussoir de manchon (12) comporte un canal intérieur alimenté avec le fluide hydraulique à transporter, ledit canal s'étendant d'un raccord de fluide hydraulique vers la surface avant (12a) du poussoir de manchon et débouchant dans le plan axial, devant sa surface avant, (12a) dans au moins une ouverture pratiquée sur la surface extérieure du poussoir de manchon (12) à travers laquelle le fourreau de compression est alimenté en pression de l'intérieur, le fourreau de compression (13) et le poussoir de manchon (12) reposant de façon étanche et coulissante l'un par rapport à l'autre dans le plan axial, devant et derrière l'au moins une ouverture.

2. Manchon selon la revendication 1, **caractérisé en ce que** le fourreau de compression (13) est alimenté en force en direction de la surface avant (12a) du poussoir de manchon (12) à l'aide d'un ressort de pression.

3. Manchon selon la revendication 1 ou 2, **caractérisé en ce que** le fourreau de compression (13) et le poussoir de manchon (12) reposent l'un contre l'autre de façon étanche sur différents diamètres de joint dans le plan axial, devant et derrière l'au moins une ouverture, des surfaces alimentées en fluide hydraulique à transporter étant prévues au niveau du fourreau de compression (13), parmi lesquelles au moins une surface produit des forces agissant dans le plan axial sur le fourreau de compression en direction du raccord de fluide hydraulique parmi lesquelles au moins une surface produit des forces agissant dans le plan axial sur le fourreau de compression en direction de la surface avant (12a) de poussoir de manchon, la somme des forces étant égale à zéro sur le plan vectoriel ou donnant une force résultante orientée en direction de la surface avant (12a) pouvant être dépassée par la force exercée par une main lors d'un processus d'accouplement.

4. Manchon selon l'une quelconque des revendications précédentes, **caractérisé en ce qu'**au moins une surface du fourreau de compression (13) alimentée avec le fluide hydraulique à transporter produisant la force orientée dans le plan axial par rapport au raccord de fluide hydraulique est prévue au niveau de la paroi extérieure du fourreau de compression (13) alimentée en fluide hydraulique depuis son intérieur, au travers d'un canal de liaison pratiqué dans la paroi du fourreau de compression (13).

5. Manchon selon la revendication 4, **caractérisé en ce que** le canal de jonction relie une chambre annulaire extérieure jouxtant à l'extérieur le fourreau de compression (13) avec l'intérieur du fourreau de compression et/ou du canal du poussoir de manchon, la chambre annulaire extérieure étant disposée entre le fourreau de compression (13) et le carter de manchon (4) ou entre le fourreau de compression (13) et un élément encastrable (9) disposé dans le carter de manchon (4).

6. Manchon selon la revendication 5, **caractérisé en ce que** la chambre annulaire extérieure forme un réservoir contenant un fluide hydraulique provenant de l'intérieur du fourreau de compression en cas de coulissement, l'augmentation de volume de la chambre annulaire se produisant lors du coulissement correspondant notamment à la réduction du volume intérieur du fourreau de compression (13).

7. Manchon selon l'une quelconque des revendications précédentes, **caractérisé en ce que** le fourreau de compression (13) et le poussoir de manchon (12) reposent l'un contre l'autre de façon étanche sur les mêmes diamètres de joint dans le plan axial, devant et derrière l'au moins une ouverture.

8. Manchon selon la revendication 7, **caractérisé en ce que** le poussoir de manchon et le fourreau de compression sont réalisés de façon cylindrique pour l'un à l'extérieur et pour l'autre à l'intérieur, notamment avec un diamètre pour l'essentiel identique, au niveau d'une zone proche de la surface avant (12a), de sorte que l'au moins une ouverture se place en face de la paroi intérieure du fourreau de compression (12) dans le plan radial, sans aucune distance intercalée ou du moins sans aucune distance notable.
